(19)

Europäisches Patentamt
European Patent Office
Office européen des brevets

(11) **EP 4 492 741 A1**

(12) **EUROPEAN PATENT APPLICATION**
published in accordance with Art. 153(4) EPC

(43) Date of publication:
**15.01.2025 Bulletin 2025/03**

(21) Application number: **23766487.5**

(22) Date of filing: **17.02.2023**

(51) International Patent Classification (IPC):
**H04L 27/26** (2006.01)    **H04B 7/0413** (2017.01)
**H04W 72/20** (2023.01)

(52) Cooperative Patent Classification (CPC):
**H04B 7/0413; H04L 27/26; H04W 72/20**

(86) International application number:
**PCT/JP2023/005625**

(87) International publication number:
**WO 2023/171308 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.03.2022  JP 2022038541**

(71) Applicant: **Sony Group Corporation
Tokyo 108-0075 (JP)**

(72) Inventors:
• **MATSUDA, Hiroki
  Tokyo 108-0075 (JP)**
• **TAKAHASHI, Mitsuki
  Tokyo 108-0075 (JP)**
• **KIMURA, Ryota
  Tokyo 108-0075 (JP)**
• **SANADA, Yukitoshi
  Yokohama-shi, Kanagawa 223-8522 (JP)**

(74) Representative: **Witte, Weller & Partner
Patentanwälte mbB
Postfach 10 54 62
70047 Stuttgart (DE)**

(54)    **COMMUNICATION DEVICE AND COMMUNICATION METHOD**

(57)    A communication method includes a transmission unit that transmits at least a first reference signal with a first subcarrier spacing out of the first reference signal and a second reference signal with a second subcarrier spacing different from the first subcarrier spacing. The first reference signal and the second reference signal are signals multiplexed in a device or on a propagation channel, and the transmission unit inserts a zero subcarrier signal into the first reference signal or into both the first reference signal and the second reference signal so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

FIG.1

**Description**

Field

The present disclosure relates to a communication device and a communication method.

Background

In cellular wireless communication, further improvement in communication performance is required. In next-generation wireless communication such as NR, improvement such as communication with lower latency and multi-terminal multiplexed communication are required. Examples of the techniques of achieving low latency and multi-terminal multiplexing in NR include a technique of improving the flexibility of numerology by changing subcarrier spacing.

Citation List

Patent Literature

Patent Literature 1: JP 2018-196029 A
Patent Literature 2: JP 2020-516134 A

Summary

Technical Problem

Introducing a new technology might result in a situation in which certain communication performance is improved but other communication performance is degraded. For example, use of multiplexed transmission of signals of different subcarrier spacings is considered to achieve lower latency and multi-terminal transmission. On the other hand, it is estimated that the use of multiplexed transmission of signals of different subcarrier spacings will cause channel estimation accuracy degradation due to non-orthogonalization of a reference signal used in channel state estimation. This would be far from improvement of communication performance.
In view of this, the present disclosure proposes a communication device, and a communication method capable of achieving high communication performance.
Note that the above problem or target is merely one of a plurality of problems or targets that can be solved or achieved by a plurality of embodiments disclosed in the present specification.

Solution to Problem

In order to solve the above problem, a communication device according to one embodiment of the present disclosure includes a transmission unit that transmits at least a first reference signal with a first subcarrier spacing out of the first reference signal and a second reference signal with a second subcarrier spacing different from the first subcarrier spacing, wherein the first reference signal and the second reference signal are signals multiplexed in a device or on a propagation channel, and the transmission unit inserts a zero subcarrier signal into the first reference signal or into both the first reference signal and the second reference signal so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

Brief Description of Drawings

FIG. 1 is a view illustrating an outline of solution in the present embodiment.
FIG. 2 is a view illustrating a configuration example of a communication system according to an embodiment of the present disclosure.
FIG. 3 is a view illustrating a configuration example of a management device according to the embodiment of the present disclosure.
FIG. 4 is a view illustrating a configuration example of a base station according to the embodiment of the present disclosure.

FIG. 5 is a view illustrating a configuration example of a terminal device according to an embodiment of the present disclosure.

FIG. 6 is a view illustrating an example of a transmission-side block diagram.

FIG. 7 is a view illustrating an example of a transmission-side block diagram.

FIG. 8 is a sequence diagram illustrating a procedure example in uplink communication or downlink communication.

FIG. 9 is a sequence diagram illustrating a procedure example in sidelink communication.

FIG. 10 is a view illustrating an example of data multiplex transmission in the same time and frequency resources.

FIG. 11 is a view illustrating another example of data multiplex transmission in the same time and frequency resources.

FIG. 12 is a view illustrating another example of data multiplex transmission in the same time and frequency resources.

FIG. 13 is a view illustrating another example of data multiplex transmission in the same time and frequency resources.

FIG. 14 is a view illustrating an example of reception processing.

FIG. 15 is a view illustrating an insertion example of zero subcarrier signals.

FIG. 16 is a view illustrating another insertion example of the zero subcarrier signals.

FIG. 17 is a view illustrating another insertion example of the zero subcarrier signals.

FIG. 18 is a view illustrating an example of a signal on the transmission side in a case where zero subcarrier signals are inserted.

FIG. 19 is a view illustrating an example of a reception-side signal in a case where zero subcarrier signals are inserted.

FIG. 20 is a view illustrating an example of a control signal in a case where a reference signal is a DMRS.

FIG. 21 is a view illustrating an example with an increased number of symbols of reference signals of wideband subcarrier spacing.

FIG. 22 is a view illustrating an example in which a time domain of a data signal is shifted.

FIG. 23 is a sequence diagram illustrating a procedure example of the present embodiment.

FIG. 24 is a view illustrating a state in which a guard interval is inserted at the front.

FIG. 25 is a view illustrating a state in which a guard interval is inserted at a rear.

FIG. 26 is a view illustrating a state in which a guard interval is inserted at the front and rear.

FIG. 27 is a view illustrating an example of autocorrelation detection.

FIG. 28 is a view illustrating another example of autocorrelation detection.

FIG. 29 is a view illustrating comparison results of channel estimation accuracy MSE between a case where the present proposal is applied and a case where the present proposal is not applied.

Description of Embodiments

Embodiments of the present disclosure will be described below in detail with reference to the drawings. Note that, in each of the following embodiments, the same parts are denoted by the same reference symbols, and a repetitive description thereof will be omitted.

Moreover, in the present specification and the drawings, a plurality of components having substantially the same functional configuration will be distinguished by attaching different numbers after the same reference numerals. For example, a plurality of configurations having substantially the same functional configuration are distinguished as necessary, such as terminal devices $30_1$, $30_2$, and $30_3$. However, when it is not particularly necessary to distinguish between the plurality of components having substantially the same functional configuration, only the same reference numeral is given. For example, in a case where it is not necessary to particularly distinguish the terminal devices $30_1$, $30_2$, and $30_3$, they are simply referred to as the terminal device 30.

One or more embodiments (including exemplary embodiments and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

<<1. Overview>>

Radio access technologies (RAT) such as Long Term Evolution (LTE) and New Radio (NR) have been studied in the 3rd Generation Partnership Project (3GPP). LTE and NR are a type of cellular communication technology, and enable mobile communication of terminal devices by using cellular arrangement of a plurality of areas covered by base stations. At this time, a single base station may manage a plurality of cells.

In the following, it is assumed that "LTE" includes LTE-Advanced (LTE-A), LTE-Advanced Pro (LTE-A Pro), and Evolved Universal Terrestrial Radio Access (E-UTRA). In addition, it is assumed that NR includes New Radio Access Technology (NRAT) and Further E-UTRA (FE-UTRA). In the following, a cell corresponding to LTE may be referred to as an LTE cell, and a cell corresponding to NR may be referred to as an NR cell.

NR is a radio access technology (RAT) as next generation (fifth generation) following LTE. The NR is a radio access technology that can support various use cases including enhanced mobile broadband (eMBB), massive machine type communications (mMTC), and Ultra-Reliable and Low Latency Communications (URLLC). Regarding NR, various technologies have been introduced with the aim of creating a technical framework that supports use scenarios, requirements, and deployment scenarios for these use cases. For example, regarding NR, in order to cope with diversification of communication services, new technologies such as a band width part (BWP) and a network slice have been introduced.

<1-1. Outline of problems and solutions of present embodiment>

Use of multiplexed transmission of signals of different subcarrier spacings is considered to achieve lower latency and multi-terminal transmission. On the other hand, however, it is estimated that the use of multiplexed transmission of signals of different subcarrier spacings will cause channel estimation accuracy degradation due to non-orthogonalization of a reference signal used in channel state estimation.

In view of these, the present embodiment proposes to solve the above problem as follows.

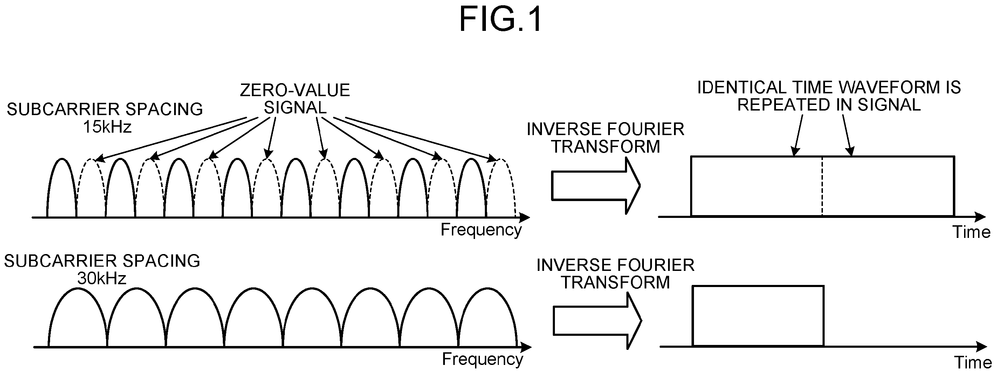

FIG. 1 is a view illustrating an outline of solution in the present embodiment. A communication device according to the present embodiment is capable of transmitting a reference signal of a first subcarrier spacing (hereinafter, referred to as a first reference signal) and a reference signal of a second subcarrier spacing (hereinafter, referred to as a second reference signal). The first subcarrier spacing is 15 kHz, for example, and the second subcarrier spacing is 30 kHz, for example. The first reference signal and the second reference signal are multiplexed with each other in the communication device or on a propagation channel.

The communication device in the present embodiment inserts a zero subcarrier signal into at least either one of the first reference signal or the second reference signal so that a ratio between a subcarrier interval number of the non-zero subcarrier signal of the second reference signal and a subcarrier interval number of the non-zero subcarrier signal of the first reference signal is to be a ratio of the first subcarrier spacing and the second subcarrier spacing. In the example of FIG. 1, the zero subcarrier signal is a zero value (null) signal indicated by a broken line, and the non-zero subcarrier signal is an ordinary subcarrier signal indicated by a solid line. In addition, the subcarrier interval number of the non-zero subcarrier signal is an interval representing the interval of a non-zero subcarrier signal and another non-zero subcarrier signal by using the number of subcarriers.

In the example of FIG. 1, the first subcarrier spacing is 15 kHz and the second subcarrier spacing is 30 kHz, having the ratio 1:2 (= 15 kHz: 30 kHz). Therefore, the communication device inserts a zero subcarrier signal into at least either one of the first reference signal or the second reference signal so that a ratio between the subcarrier interval number of the non-zero subcarrier signal of the second reference signal and the subcarrier interval number of the non-zero subcarrier signal of the first reference signal becomes 1:2. In the example of FIG. 1, the communication device inserts zero subcarrier signals into the first reference signal so that the non-zero subcarrier signal and the zero subcarrier signal are alternated.

As described above, by inserting the zero subcarrier signal, at least ether one of the signal obtained by transforming the first reference signal into the time domain signal by a technique such as the inverse Fourier transform or the signal obtained by transforming the second reference signal into the time domain signal by the technique such as the inverse Fourier transform becomes a signal repeated in the time domain. Compared with a signal having a wide subcarrier spacing, a signal having a narrow subcarrier spacing has a longer signal waveform in the time domain. By inserting the zero subcarrier signal, the signal waveform in the time domain becomes a repeated signal waveform in the middle, making it possible for the communication device to transmit the signal in a state of being aligned with the boundary of the time domain of the signal having a wide subcarrier spacing.

The communication device on the reception side obtains a sliding correlation by using a reference signal correlation sequence corresponding to the first reference signal when performing channel estimation of the first reference signal, and obtains a sliding correlation by using a reference signal correlation sequence corresponding to the second reference signal when performing channel estimation of the second reference signal. At this time, the communication device on the reception side applies sequence shift to the reference signal sequence. With this configuration, the synchronization detection result in the time domain is not multiplexed between different subcarrier spacings, making it possible for the communication device to perform channel estimation with high accuracy even when the reference signal is a signal in which signals of different subcarrier spacings are multiplexed.

<<2. Configuration of communication system>>

The outline of the present embodiment has been described above. Before describing the present embodiment in detail, a configuration of the communication system 1 including the information processing device of the present embodiment will be described. Note that the communication system can be rephrased as an information processing system.

## <2-1. Configuration example of communication system>

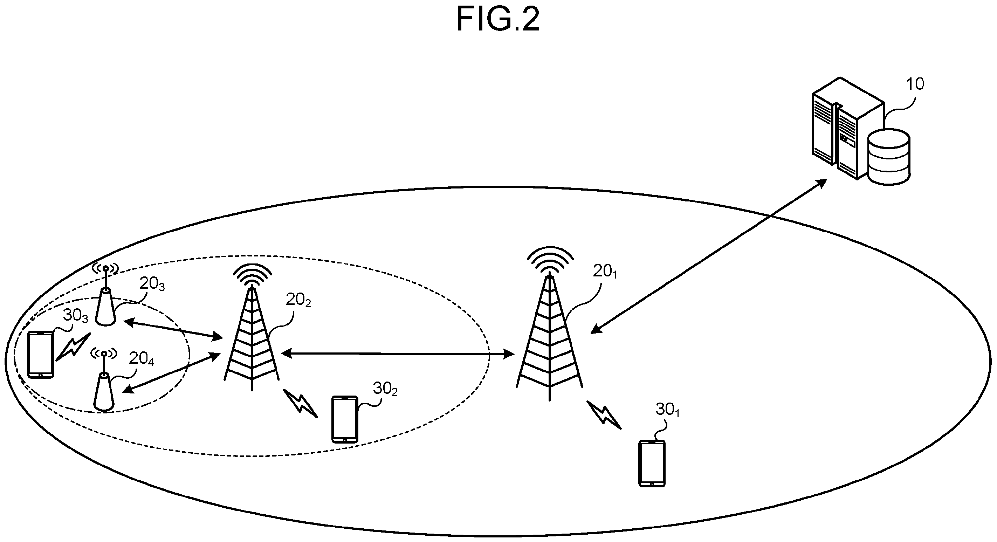

FIG. 2 is a view illustrating a configuration example of the communication system 1 according to the embodiment of the present disclosure. The communication system 1 includes a management device 10, a base station 20, and a terminal device 30. With individual wireless communication devices constituting the communication system 1 operating in cooperation with each other, the communication system 1 provides a user with a wireless network capable of mobile communication. The wireless network of the present embodiment includes a radio access network and a core network, for example. In the present embodiment, the wireless communication device is a device having a wireless communication function, and in the example of FIG. 2, the device corresponds to the base station 20 and the terminal device 30.

The communication system 1 may include a plurality of management devices 10, a plurality of base stations 20, and a plurality of terminal devices 30. In the example of FIG. 2, the communication system 1 includes base stations $20_1$, $20_2$, $20_3$, $20_4$ and so on as the base station 20, and includes terminal devices $30_1$ $30_2$, $30_3$ and so on as the terminal device 30. The communication system 1 may include a plurality of management devices 10.

The device in the figure may be considered as a device in a logical sense. That is, parts of the device in the drawing may be partially actualized by a virtual machine (VM), a container, a docker, or the like, and they may be implemented on physically the same piece of hardware.

The communication system 1 may be compatible with a radio access technology (RAT) such as long term evolution (LTE) and new radio (NR). LTE and NR are a type of cellular communication technology, and enable mobile communication of terminal devices by using cellular arrangement of a plurality of areas covered by base stations. The radio access method used by the communication system 1 is not limited to LTE and NR, and may be other radio access methods such as wideband code division multiple access (W-CDMA) and code division multiple access 2000 (cdma2000), for example.

Furthermore, the base station or the relay station constituting the communication system 1 may be a terrestrial station or a non-terrestrial station. The non-terrestrial station may be a satellite station or an aircraft station. If the non-terrestrial station is a satellite station, the communication system 1 may be a Bent-pipe (Transparent) mobile satellite communication system.

In the present embodiment, the terrestrial station (also referred to as a terrestrial base station) refers to a base station (a relay station) installed on the ground. The "ground" represents not only a land but also a terrestrial location in a broad sense including underground, above-water, and underwater. Note that, in the following description, the description of "terrestrial station" may be referred to as a "gateway".

The base station in LTE may be referred to as Evolved Node B (eNodeB) or eNB. NR base stations may be referred to as gNodeB or gNB. In LTE and NR, a terminal device (also referred to as a mobile station, or terminal) may be referred to as user equipment (UE). The terminal device is a type of communication device, and is also referred to as a mobile station or a terminal.

In the present embodiment, the concept of the "communication device" includes not only a portable mobile device (terminal device) such as a mobile terminal but also a device installed in a structure or a mobile body. The structure or a mobile body itself may be regarded as a communication device. In addition, the concept of the communication device includes not only a terminal device but also a base station and a relay station. The communication device is a type of processing device and information processing device. The communication device can be paraphrased as a transmission device or a reception device.

Hereinafter, configurations of individual devices included in the communication system 1 will be specifically described. The configuration of each device illustrated below is just an example. The configuration of each device may differ from the configuration below.

## <2-2. Configuration example of management device>

Next, a configuration of the management device 10 will be described.

The management device 10 is an information processing device (computer) that manages a wireless network. For example, the management device 10 is an information processing device that manages communication of the base station 20. For example, the management device 10 is a device constituting a core network. Here, examples of the core network include an evolved packet core (EPC), a 5G core (5GC), or a next generation core (NGC). The management device 10 controls the base station 20 and controls the terminal device 30 via the base station 20.

Note that the management device 10 may be a device having some functions of the core network or may be a device having all the functions. The management device 10 may be a device having a function as a Mobility Management Entity (MME), for example. The management device 10 may be a device having a function as an Access and Mobility Management Function (AMF) and/or a Session Management Function (SMF). The functions of the management device 10 are not to be limited to the MME, the AMF, or the SMF. The management device 10 may be a device having a function as a Network Slice Selection Function (NSSF), an Authentication Server Function (AUSF), a Policy Control Function (PCF), or Unified Data Management (UDM). Furthermore, the management device 10 may be a device having a function as a Home Subscriber Server (HSS).

Note that the management device 10 may have a function of a gateway. For example, the management device 10 may have a function as a Serving Gateway (S-GW) or a Packet Data Network Gateway (P-GW). Furthermore, the management device 10 may have a function as a User Plane Function (UPF). At this time, the management device 10 may have a plurality of UPFs. Each of the plurality of UPFs may function as a UPF resource of a different network slice.

The core network includes a plurality of network functions. Individual network functions may be aggregated into one physical device, or may be distributed to a plurality of physical devices. That is, the management device 10 can be disposed in a plurality of devices as distributed arrangement. Further, this distributed arrangement may be controlled to be performed dynamically. The base station 20 and the management device 10 constitute one network, and provide a wireless communication service to the terminal device 30. The management device 10 is connected to the Internet, and the terminal device 30 can use various services provided over the Internet via the base station 20.

Note that the management device 10 does not necessarily have to be a device constituting a core network. For example, it is assumed that the core network is a core network of Wideband Code Division Multiple Access (W-CDMA) or Code Division Multiple Access 2000 (cdma2000). At this time, the management device 10 may be a device that functions as a Radio Network Controller (RNC).

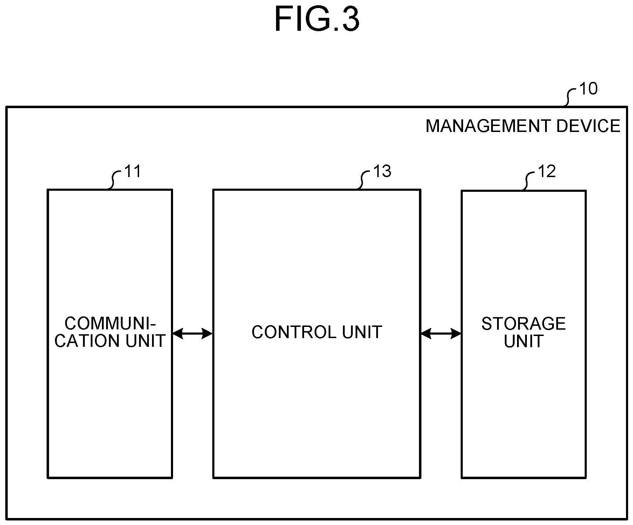

FIG. 3 is a view illustrating a configuration example of the management device 10 according to the embodiment of the present disclosure. The management device 10 includes a communication unit 11, a storage unit 12, and a control unit 13. Note that the configuration illustrated in FIG. 3 is a functional configuration, and the hardware configuration may be different from this. Furthermore, the functions of the management device 10 may be implemented in a statically or dynamically distributed form in a plurality of physically separated configurations. For example, the management device 10 may be constituted with a plurality of server devices.

The communication unit 11 is a communication interface for communicating with other devices. The communication unit 11 may be a network interface, or may be a device connection interface. For example, the communication unit 11 may be a local area network (LAN) interface such as a network interface card (NIC), or may be a universal serial bus (USB) interface including a USB host controller, a USB port, and the like. Furthermore, the communication unit 11 may be a wired interface, or may be a wireless interface. The communication unit 11 functions as a communication means of the management device 10. The communication unit 11 communicates with the base station 20 and the like under the control of the control unit 13.

The storage unit 12 is a data readable/writable storage device such as dynamic random access memory (DRAM), static random access memory (SRAM), a flash drive, or a hard disk. The storage unit 12 functions as a storage means in the management device 10. The storage unit 12 stores, for example, a connection state of the terminal device 30. For example, the storage unit 12 stores a Radio Resource Control (RRC) state or an EPS connection management (ECM) state or a 5G system connection management (CM) state of the terminal device 30. The storage unit 12 may function as a unit referred to as "home memory" that stores positional information of the terminal device 30.

The control unit 13 is a controller that controls individual components of the management device 10. The control unit 13 is implemented by a processor such as a central processing unit (CPU), a micro processing unit (MPU), or a graphics processing unit (GPU), for example. For example, the control unit 13 is actualized by execution of various programs stored in the storage device inside the management device 10 by the processor using random access memory (RAM) or the like as a work area. Note that the control unit 13 may be implemented by an integrated circuit such as an application specific integrated circuit (ASIC) or a field programmable gate array (FPGA). The CPU, MPU, GPU, ASIC, and FPGA can all be regarded as controllers.

<2-3. Configuration example of base station>

Next, a configuration of the base station 20 will be described.

The base station 20 is a wireless communication device that performs wireless communication with the terminal device 30. The base station 20 may be configured to perform wireless communication with the terminal device 30 via a relay station, or may be configured to directly perform wireless communication with the terminal device 30.

The base station 20 is a type of communication device. The base station 20 is, for example, a device corresponding to a radio base station (Base Station, Node B, eNB, gNB, etc.) or a radio access point. The base station 20 may be a radio relay station. Furthermore, the base station 20 may be an optical link device referred to as a Remote Radio Head (RRH) or a Radio Unit (RU). Furthermore, the base station 20 may be a receiving station such as a Field Pickup Unit (FPU). In addition, the base station 20 may be an Integrated Access and Backhaul (IAB) donor node or an IAB relay node that provides a radio access channel and a radio backhaul channel by using time division multiplexing, frequency division multiplexing, or space division multiplexing.

In the example of FIG. 2, the base station $20_1$ is directly or indirectly connected to the base station $20_2$, the base station $20_3$, and the base station $20_4$, and can operate as a Central Unit (CU) for the base station $20_2$, the base station $20_3$, and the base station $20_4$. Furthermore, the base station $20_2$ is connected to the base station $20_1$ that operates as a CU, and can operate as a Distributed Unit (DU). In addition, the base station $20_3$ and the base station $20_4$ are connected to the base station $20_1$ and/or the base station $20_2$ that operate as a CU, and can operate as a DU. In addition, the base station $20_3$ and the base station $20_4$ are connected to the base station $20_2$ that operates as a DU, and each can operate as a Radio Unit (RU).

Note that the radio access technology used by the base station 20 may be a cellular communication technology or a wireless LAN technology. Needless to say, the radio access technology used by the base station 20 is not limited thereto, and may be other radio access technologies. For example, the radio access technology used by the base station 20 may be a low power wide area (LPWA) communication technology. Needless to say, the wireless communication used by the base station 20 may be wireless communication using millimeter waves. Furthermore, the wireless communication used by the base station 20 may be wireless communication using radio waves or wireless communication (optical wireless communication) using infrared rays or visible light. The base station 20 may be capable of Non-Orthogonal Multiple Access (NOMA) communication with the terminal device 30. Here, NOMA communication refers to communication (transmission, reception, or both) using non-orthogonal resources. Note that the base station 20 may be capable of performing NOMA communication with another base station 20.

The base station 20 may be capable of communicating with each other via a base station-core network interface (for example, NG Interface, S1 Interface, or the like). This interface may be implemented as wired or wireless interface. Furthermore, the base stations may be capable of communicating with each other via an interbase station interface (for example, Xn Interface, X2 Interface, S1 Interface, F1 Interface, or the like). This interface may be implemented as wired or wireless interface.

Note that the concept of the base station includes not only a donor base station but also a relay base station (also referred to as a relay station). For example, the relay base station may be any one of RF Repeater, Smart Repeater, and Intelligent Surface. Furthermore, a base station conceptually includes not only a structure having a function of a base station but also a device installed in the structure.

Examples of the structure include a building such as a high-rise building, a house, a steel tower, a station facility, an airport facility, a harbor facility, an office building, a school building, a hospital, a factory, a commercial facility, or a stadium. The concept of the structure includes not only buildings but also non-building structures such as tunnels, bridges, dams, fences, and steel columns, as well as facilities such as cranes, gates, and windmills. In addition, a structure conceptually includes not only land-based (ground-based, in a narrow sense) structures or underground structures but also structures on the water, such as a jetty and a mega-float, and underwater structures such as an ocean observation facility. The base station may be referred to as an information processing device.

The base station 20 may be a donor station or a relay station. The base station 20 may be a fixed station or a mobile station. The mobile station is a wireless communication device (for example, a base station) configured to be movable. At this time, the base station 20 may be a device installed on a mobile body, or may be a mobile body itself. For example, a relay station having mobility can be regarded as the base station 20 as a mobile station. In addition, a device designed to have mobility, such as an Unmanned Aerial Vehicle (UAV) represented by a drone, or a smartphone, and having a function of a base station (at least a part of the function of a base station) also corresponds to the base station 20 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, and a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

Furthermore, the base station 20 may be a terrestrial base station (terrestrial station) installed on the ground. For example, the base station 20 may be a base station disposed on a structure on the ground, or may be a base station installed in a mobile body moving on the ground. More specifically, the base station 20 may be an antenna installed in a structure such as a building and a signal processing device connected to the antenna. Note that the base station 20 may be a structure or a mobile body itself. The "ground" represents not only a land (ground in a narrow sense) but also a terrestrial location in a broad sense including underground, above-water, and underwater. Note that the base station 20 is not limited to a terrestrial base station. For example, in a case where the communication system 1 is a satellite communication system, the base station 20 may be an aircraft station. From the perspective of a satellite station, an aircraft station located on the earth is a terrestrial station.

Note that the base station 20 is not limited to a terrestrial station. The base station 20 may be a non-terrestrial base station (non-terrestrial station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be a space mobile body itself. A space mobile body is a mobile body that moves outside the atmosphere. Examples of the space mobile body include artificial bodies such as artificial satellites, spacecraft, space stations, and probes. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. Accordingly, the satellite station may be a device mounted on a low earth orbiting satellite, a medium earth orbiting satellite, a geostationary earth orbiting satellite, or a highly elliptical orbiting satellite.

The aircraft station is a wireless communication device capable of floating in the atmosphere, such as an aircraft. The aircraft station may be a device mounted on an aircraft or the like, or may be an aircraft itself. The concept of the aircraft includes not only heavy aircraft such as an airplane and a glider but also light aircraft such as a balloon and an airship. In addition, the concept of the aircraft includes not only a heavy aircraft and a light aircraft but also a rotorcraft such as a helicopter and an auto-gyro. Note that the aircraft station (or an aircraft on which an aircraft station is mounted) may be an unmanned aerial vehicle such as a drone.

Note that the concept of the unmanned aerial vehicle also includes an unmanned aircraft system (UAS) and a tethered UAS. The concept of unmanned aerial vehicles also includes a Lighter-than-Air (LTA) unmanned aircraft system (UAS) and a Heavier-than-Air (HTA) unmanned aircraft system (UAS). Other concepts of unmanned aircraft also include High Altitude Platforms (HAPs) unmanned aircraft system (UAS).

The coverage of the base station 20 may be large such as a macro cell or small such as a pico cell. Needless to say, the coverage of the base station 20 may be extremely small such as a femto cell. Furthermore, the base station 20 may have a beamforming capability. In this case, the base station 20 may form a cell or a service area for each beam.

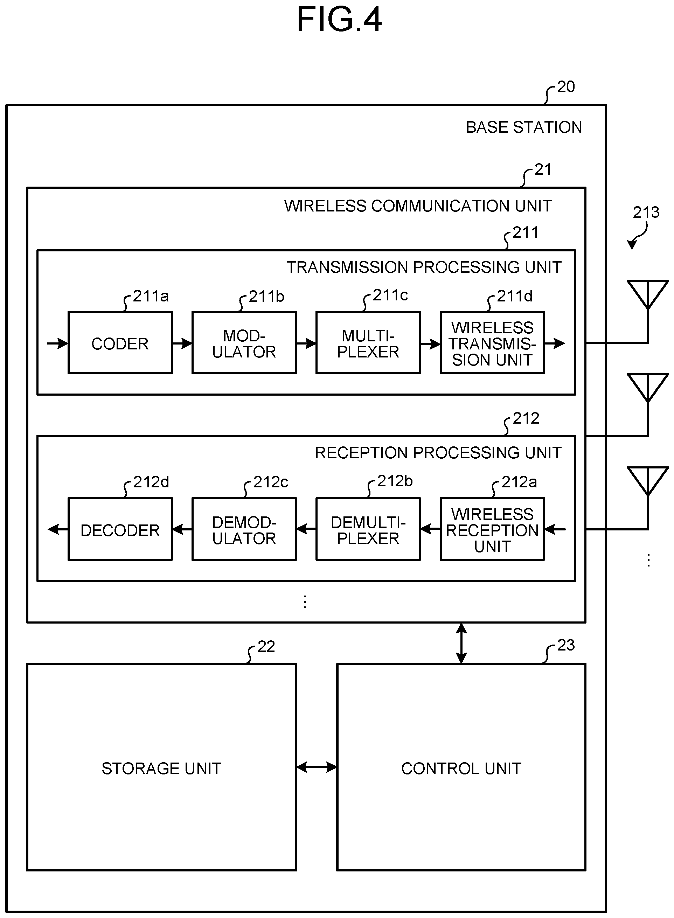

FIG. 4 is a view illustrating a configuration example of the base station 20 according to the embodiment of the present disclosure. The base station 20 includes a wireless communication unit 21, a storage unit 22, and a control unit 23. Note that the configuration illustrated in FIG. 4 is a functional configuration, and the hardware configuration may be different from this. Furthermore, the functions of the base station 20 may be implemented in a distributed form in a plurality of physically separated configurations.

The wireless communication unit 21 is a signal processing unit for performing wireless communication with other wireless communication devices (for example, the terminal device 30). The wireless communication unit 21 operates under the control of the control unit 23. The wireless communication unit 21 may support one or a plurality of radio access methods. For example, the wireless communication unit 21 supports both NR and LTE. The wireless communication unit 21 may support W-CDMA or cdma2000 in addition to NR and LTE. Furthermore, the wireless communication unit 21 may support an automatic retransmission technology such as Hybrid Automatic Repeat reQuest (HARQ). The wireless communication unit 21 can function as a transmission unit or a reception unit of the base station 20.

The wireless communication unit 21 includes a transmission processing unit 211, a reception processing unit 212, and an antenna 213. The wireless communication unit 21 may include a plurality of the transmission processing units 211, a plurality of the reception processing units 212, and a plurality of the antennas 213. In a case where the wireless communication unit 21 supports a plurality of radio access methods, individual portions of the wireless communication unit 21 can be configured separately for each of the radio access methods. For example, the transmission processing unit 211 and the reception processing unit 212 may be individually configured for LTE and NR. Furthermore, the antenna 213 may include a plurality of antenna elements (for example, a plurality of patch antennas). In this case, the wireless communication unit 21 may be configured to be capable of beamforming. The wireless communication unit 21 may be configured to be able to perform polarization beamforming using vertically polarized waves (V-polarized waves) and horizontally polarized waves (H-polarized waves).

The transmission processing unit 211 performs transmission processing of downlink control information and downlink data. The transmission processing unit 211 codes the downlink control information and the downlink data input from the control unit 23 by using a coding method such as block coding, convolutional coding, or turbo coding. The coder may perform coding using a polar code or a Low Density Parity Check (LDPC) code. The transmission processing unit 211 modulates the coded bits by a predetermined modulation scheme such as BPSK, QPSK, 16 QAM, 64 QAM, or 256 QAM. In this case, the signal points on the constellation do not necessarily have to be equidistant. The constellation may be a non uniform constellation (NUC). The transmission processing unit 211 multiplexes the modulation symbol of each of channels and the downlink reference signal and allocates the multiplexed signals on a predetermined resource element. Subsequently, the transmission processing unit 211 performs various types of signal processing on the multiplexed signal. For example, the transmission processing unit 211 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 211 is transmitted from the antenna 213.

The reception processing unit 212 processes an uplink signal received via the antenna 213. For example, the reception processing unit 212 performs processing on the uplink signal, such as down-conversion, removal of unnecessary frequency components, amplification level control, quadrature demodulation, reception timing estimation, conversion to digital signal, removal of guard interval (cyclic prefix), and frequency domain signal extraction using fast Fourier transform. The reception processing unit 212 then demultiplexes an uplink channel such as a physical uplink shared channel (PUSCH) or a physical uplink control channel (PUCCH) and an uplink reference signal from the signal that has undergone these processing procedures, and performs channel estimation based on the uplink reference signal. Subsequently, the reception processing unit 212 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 256 QAM. In this case, the signal points on the constellation do not necessarily have to be equidistant. The constellation may be a non-uniform constellation (NUC). Subsequently, the reception processing unit 212 performs decoding processing on the coded bits of the demodulated uplink channel. The decoded uplink data and uplink control information are output to the control unit 23.

The antenna 213 is an antenna device (antenna unit) that performs mutual conversion of a current and a radio wave. The antenna 213 may include one antenna element (for example, one patch antenna) or may include a plurality of antenna elements (for example, a plurality of patch antennas) (i.e., array antenna). In a case where the antenna 213 includes a plurality of antenna elements, the wireless communication unit 21 may be configured to be capable of beamforming. For example, the wireless communication unit 21 may control the directivity of a radio signal using a plurality of antenna elements to generate a directional beam. The antenna 213 may be a dual polarized antenna. When the antenna 213 is a dual polarized antenna, the wireless communication unit 21 may use a vertically polarized wave (V polarized wave) and a horizontally polarized wave (H polarized wave) when transmitting radio signals. Then, the wireless communication unit 21 may control the directivity of the radio signal transmitted using the vertically polarized wave and the horizontally polarized wave. Furthermore, the wireless communication unit 21 may transmit and receive spatially multiplexed signals via a plurality of layers including a plurality of antenna elements.

The storage unit 22 is a data readable/writable storage device such as DRAM, SRAM, a flash drive, and a hard disk. The storage unit 22 functions as a storage means in the base station 20.

The control unit 23 is a controller that controls individual components of the base station 20. The control unit 23 is implemented by a processor such as a central processing unit (CPU) or a micro processing unit (MPU), for example. For example, the control unit 23 is implemented by execution of various programs stored in the storage device inside the base station 20 by the processor using random access memory (RAM) or the like as a work area. Note that the control unit 23 may be implemented by an integrated circuit such as an application specific integrated circuit (ASIC) or a field programmable gate array (FPGA). The CPU, MPU, ASIC, and FPGA can all be regarded as controllers. Furthermore, the control unit 23 may be implemented by a graphics processing unit (GPU) in addition to or instead of the CPU. The control unit 23 can function as a transmission unit or a reception unit of the base station 20.

In some embodiments, the concept of a base station may be constituted with a collection of a plurality of physical or logical devices. For example, in the present embodiment, the base station may be classified into a plurality of devices such as a Baseband Unit (BBU) and a Radio Unit (RU). The base station may be interpreted as an assembly of the plurality of devices. In addition, the base station may be either or both of a BBU and an RU. The BBU and the RU may be connected by a predetermined interface (for example, an enhanced Common Public Radio Interface (eCPRI)). The RU may be referred to as a Remote Radio Unit (RRU) or a Radio DoT (RD). The RU may correspond to a gNB Distributed Unit (gNB-DU) described below. The BBU may correspond to a gNB Central Unit) (gNB-CU) described below. Alternatively, the RU may be a wireless device connected to a gNB-DU described below. The gNB-CU, the gNB-DU, and the RU connected to the gNB-DU may be configured to conform to an Open Radio Access Network (O-RAN). The RU may be a device integrally formed with an antenna. An antenna (for example, an antenna integrally formed with an RU) included in the base station may adopt an Advanced Antenna System and support MIMO (for example, FD-MIMO) or beamforming. For example, the antenna included in the base station may include 64 transmitting antenna ports and 64 receiving antenna ports.

In addition, an antenna may be integrated on the RU. In addition, the antenna connected to or integrated on the RU may be an antenna panel including one or more antenna elements, and the RU may include one or more antenna panels. For example, the RU may include two types of antenna panels of a horizontally polarized antenna panel and a vertically polarized antenna panel, or two types of antenna panels of a clockwise (right-hand) circularly polarized antenna panel and a counterclockwise (left-hand) circularly polarized antenna panel. In addition, the RU may form and control an independent beam for each antenna panel.

The plurality of base stations may be connected to each other. One or the plurality of base stations may be included in a Radio Access Network (RAN). That is, the base station may be simply referred to as a RAN, a RAN node, an Access Network (AN), or an AN node. RAN in LTE may be referred to as Enhanced Universal Terrestrial RAN (EUTRAN). In addition, RAN in NR may be referred to as NGRAN. RAN in W-CDMA (UMTS) may be referred to as UTRAN.

The base station in LTE may be referred to as Evolved Node B (eNodeB) or eNB. That is, EUTRAN includes one or a plurality of eNodeB (eNB). NR base stations may be referred to as gNodeB or gNB. At this time, NGRAN contains one or a plurality of gNBs. EUTRAN may include gNB (en-gNB) connected to the core network (EPC) in LTE communication systems (EPS). Similarly, NGRAN may include an ng-eNB connected to the core network 5GC in a 5G communication system (5GS).

When the base station is eNB, gNB, or the like, the base station may be referred to as 3GPP access. Furthermore, when the base station is a radio access point, the base station may be referred to as non-3GPP access. The base station may be an optical link device referred to as a Remote Radio Head (RRH) or a Radio Unit (RU). Furthermore, in a case where the base station is a gNB, the base station may be a combination of the gNB-CU and the gNB-DU described above, or may be any one of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an access stratum. On the other hand, the gNB-DU hosts a plurality of lower layers (for example, radio link control (RLC), Medium Access Control (MAC), and Physical Layer (PHY)) in an access stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), some configurations (setting information) such as IE: cell group Config may be generated by the gNB-DU, while the remaining configurations (setting information) may be generated by the gNB-CU, for example. These configurations (setting information) may be transmitted and received through an F1 interface described below.

The base station may be configured to be able to communicate with another base station. For example, when a plurality of base stations is eNB each or a combination of eNBs and en-gNBs, the base stations may be connected to each other by an X2 interface. Furthermore, when a plurality of base stations is gNB each or a combination of gn-eNB and gNB, the devices may be connected to each other by an Xn interface. Furthermore, when a plurality of base stations is a combination of gNB CU and gNB DU, the devices may be connected to each other by the F1 interface described above. The message/information (for example, RRC signaling, MAC control element (MAC CE), or DCI) described below may be transmitted between a plurality of base stations via the X2 interface, the Xn interface, or the F1 interface, for example.

The cell provided by the base station may be referred to as a serving cell. The serving cell conceptually includes a primary cell (PCell) and a secondary cell (SCell). When dual connectivity is configured for the UE (for example, the terminal device 30), the PCell provided by a Master Node (MN) and zero or one or more SCells may be referred to as a Master Cell group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity.

The serving cell may include a Primary Secondary Cell or Primary SCG Cell (PSCell). In a case where dual connectivity is configured in the UE, the PSCell and the zero or one or more SCells provided by a secondary node (SN) may be referred to as Secondary Cell group (SCG). Unless specially configured (for example, PUCCH on SCell), a physical uplink control channel (PUCCH) is transmitted in the PCell and the PSCell, but is not transmitted in the SCell. In addition, a radio link failure is also detected in the PCell and the PSCell, but is not detected in the SCell (need not be detected). In this manner, since the PCell and the PSCell have a special role in the serving cell, these cells are also referred to as Special Cells (SpCells).

One cell may be associated with one downlink component carrier and one uplink component carrier. In addition, the system bandwidth corresponding to one cell may be divided into a plurality of bandwidth parts (BWPs). In this case, one or a plurality of BWPs may be configured for the UE, and one BWP may be used for the UE as an active BWP. In addition, radio resources (for example, a frequency band, a numerology (subcarrier spacing), and a slot format (slot configuration)) usable by the terminal device 30 may be different for each cell, each component carrier, or each BWP.

<2-4. Configuration example of terminal device>

Next, a configuration of the terminal device 30 will be described. The terminal device 30 can be rephrased as a user equipment (UE) 30.

The terminal device 30 is a wireless communication device that performs wireless communication with other communication devices such as the base station 20. Examples of the terminal device 30 include a mobile phone, a smart device (smartphone or tablet), a personal digital assistant (PDA), or a personal computer. Furthermore, the terminal device 30 may be a device such as a business camera equipped with a communication function, or may be a motorcycle, a moving relay vehicle, or the like on which communication equipment such as a field pickup unit (FPU) is mounted. The terminal device 30 may be a machine to machine (M2M) device or an Internet of Things (IoT) device.

The terminal device 30 may be capable of individually communicating with a plurality of base stations 20. Furthermore, the terminal device 30 may be capable of simultaneously communicating with a plurality of base stations 20. In the example of FIG. 2, the terminal device $30_3$ may perform communication simultaneously with the base station $20_1$ and

the base station $20_3$. At this time, since the base station $20_1$ has a wider coverage than the base station $20_3$, it is conceivable that the base station $20_1$ will perform communication using a lower frequency band (for example, the Sub-6 GHz band) than the base station $20_3$. On the other hand, since the base station $20_3$ has a narrower coverage range than the base station $20_1$, it is conceivable that the base station $20_3$ will perform communication using a higher frequency band (for example, a millimeter wave band) than the base station $20_1$.

The terminal device 30 may be capable of performing NOMA communication with the base station 20. Furthermore, the terminal device 30 may be able to use an automatic retransmission technology such as HARQ when communicating with the base station 20. Furthermore, the terminal device 30 may be capable of sidelink communication with another terminal device 30. The terminal device 30 may be capable of using an automatic retransmission technology such as HARQ also at the time of performing sidelink communication. The terminal device 30 may also be capable of NOMA communication in the communication (sidelink) with another terminal device 30. Furthermore, the terminal device 30 may be capable of LPWA communication with other communication devices (for example, the base station 20 or another terminal device 30). In addition, the wireless communication used by the terminal device 30 may be wireless communication using millimeter waves. The wireless communication (including sidelink communication) used by the terminal device 30 may be wireless communication using radio waves or wireless communication using infrared rays or visible light (optical wireless communication).

Furthermore, the terminal device 30 may be a mobile device. The mobile device is a movable wireless communication device. At this time, the terminal device 30 may be a wireless communication device installed on a mobile body, or may be the mobile body itself. For example, the terminal device 30 may be a vehicle that moves on a road, such as an automobile, a bus, a truck, or a motorbike, may be a vehicle traveling on a rail installed in the track of a train or the like, or may be a wireless communication device mounted on the vehicle. The mobile body may be a mobile terminal, or may be a mobile body that moves on land (on the ground in a narrow sense), in the ground, on water, or under water. Furthermore, the mobile body may be a mobile body that moves inside the atmosphere, such as a drone or a helicopter, or may be a mobile body that moves outside the atmosphere, such as an artificial satellite.

The terminal device 30 may perform communication while being simultaneously connected to a plurality of base stations or a plurality of cells. For example, when one base station supports a communication area via a plurality of cells (for example, pCell and sCell), it is possible to bundle the plurality of cells and communicate between the base station 20 and the terminal device 30 by using a carrier aggregation (CA) technology, a dual connectivity (DC) technology, or a multi-connectivity (MC) technology. Alternatively, the terminal device 30 and the plurality of base stations 20 can communicate with each other by a Coordinated Multi-Point Transmission and Reception (CoMP) technology via cells of different base stations 20.

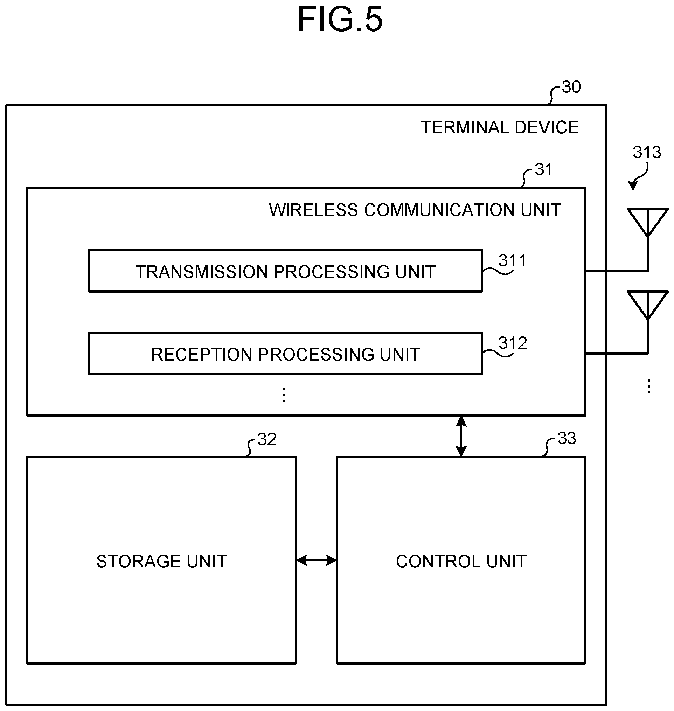

FIG. 5 is a view illustrating a configuration example of the terminal device 30 according to the embodiment of the present disclosure. The terminal device 30 includes a wireless communication unit 31, a storage unit 32, and a control unit 33. The configuration illustrated in FIG. 5 is a functional configuration, and the hardware configuration may be different from this. Furthermore, the functions of the terminal device 30 may be implemented in a distributed form in a plurality of physically separated configurations.

The wireless communication unit 31 is a signal processing unit for performing wireless communication with other wireless communication devices (for example, the base station 20 and another terminal device 30). The wireless communication unit 31 operates under the control of the control unit 33. The wireless communication unit 31 includes a transmission processing unit 311, a reception processing unit 312, and an antenna 313. The configurations of the wireless communication unit 31, the transmission processing unit 311, the reception processing unit 312, and the antenna 313 may be similar to the configurations of the wireless communication unit 21, the transmission processing unit 211, the reception processing unit 212, and the antenna 213 of the base station 20. Furthermore, the wireless communication unit 31 may be configured to be capable of beamforming similarly to the wireless communication unit 21. Further, similarly to the wireless communication unit 21, the wireless communication unit 31 may be capable of transmitting and receiving spatially multiplexed signals. The wireless communication unit 31 can function as a transmission unit or a reception unit of the terminal device 30.

The storage unit 32 is a data readable/writable storage device such as DRAM, SRAM, a flash drive, and a hard disk. The storage unit 32 functions as a storage means in the terminal device 30.

The control unit 33 is a controller that controls individual parts of the terminal device 30. The control unit 33 is actualized by a processor such as a CPU or an MPU, for example. For example, the control unit 33 is implemented by a processor executing various programs stored in a storage device inside the terminal device 30 using RAM or the like as a work area. Note that the control unit 33 may be implemented by an integrated circuit such as an ASIC or an FPGA. The CPU, MPU, ASIC, and FPGA can all be regarded as controllers. The control unit 33 may be implemented by a GPU in addition to or instead of the CPU. The control unit 33 can function as a transmission unit or a reception unit of the terminal device 30.

<<3. Basic operation of communication system 1>>

The configuration of the communication system 1 has been described above. Next, the basic operation of the communication system 1 of the present embodiment will be described.

<3-1. Transmission/reception process of communication device>

First, a transmission/reception process of a communication device included in the communication system 1 will be described. Here, the communication device is the base station 20 or the terminal device 30, for example. In the following description, a communication device on the transmission side may be referred to as a transmission device, and a communication device on the reception side may be referred to as a reception device.

(Transmission Process)

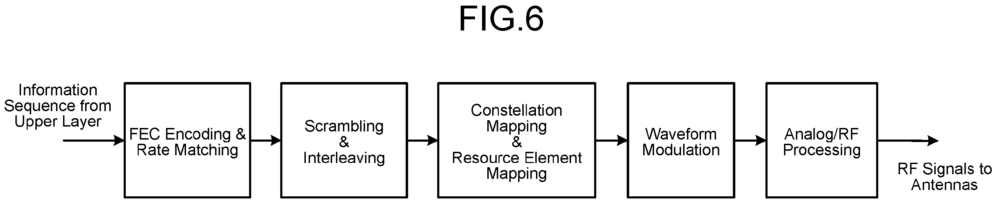

First, a transmission process in the present embodiment will be described. FIG. 6 is a view illustrating an example of a transmission-side block diagram.
The transmission device performs error detection coding, error correction coding, and coding rate adjustment on a bit sequence (for example, a transport block, a packet, a frame, or the like) transmitted from an upper layer (for example, a data link layer, or Layer 2). Here, an example of the error detection coding is Cyclic Redundancy Check (CRC). An example of error correction coding is Forward Error Correction (FEC). Examples of error correction coding include Turbo Coding, Convolutional Coding, LDPC Coding, polar Coding, and Reed-Solomon Coding. Examples of coding rate adjustment (rate matching) include puncturing and repetition.
Thereafter, the transmission device performs scrambling and interleaving on the coded bit sequence. With this processing, the transmission device enhances the effect of error correction. Note that scrambling is processing of inverting bit 01 according to a predetermined pattern. The interleaving is processing of rearranging bits according to a predetermined pattern.
Thereafter, the transmission device transforms the bit sequence into a complex signal point sequence and arranges the obtained complex signal point sequence in the resource element.
Thereafter, the transmission device performs waveform modulation. Waveform modulation is performed according to, for example, Orthogonal Frequency Division Multiple Access (OFDMA), Single-Carrier Frequency Division Multiple Access (SC-FDMA), Generalized Frequency Division Multiple Access (GFDMA), Filtered OFDMA (FOFDMA), and Universal Filtered Multi-Carrier (UFMC).
Thereafter, the transmission device performs analog/high frequency signal processing through digital-to-analog conversion (DAC). Subsequently, the transmission device transmits the radio wave from the antenna.

(Reception Process)

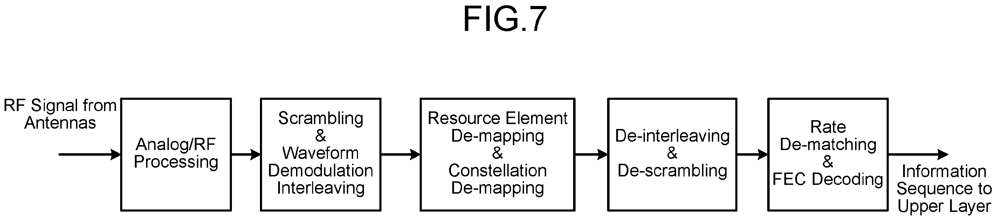

Next, a reception process will be described. FIG. 7 is a view illustrating an example of a receiving-side block diagram.
First, the reception device performs processing such as analog processing, frequency conversion processing, and analog-digital conversion processing on the signal received by the antenna. With this processing, the reception device converts the signal received by the antenna into a digital signal.
Thereafter, the reception device performs demodulation processing according to the used waveform. Here, examples of demodulation processing to be applied according to Orthogonal Frequency Division Multiple Access (OFDMA) and Single Carrier Frequency Division Multiple Access (SC-FDMA) include processing such as discrete Fourier transform (DFT), inverse discrete Fourier transform (IDFT), fast Fourier transform (FFT), and inverse fast Fourier transform (IFFT).
Thereafter, the reception device performs processing of extracting a resource element of a signal desired to be demodulated and decoded in accordance with a physical channel configuration, a reference signal configuration, allocation of a resource element for each user, and the like. In constellation de-mapping, the reception device performs reception, demodulation, and decoding corresponding to the transmission method of the present embodiment. The output here is a hard decision value or a soft decision value of a target coded bit sequence (or transmission bit sequence). The hard decision value (hard decision) is a sequence that takes binary discrete values of {0, 1} (or {-1, 1}). The soft decision value is also referred to as soft decision, soft information, or Log Likelihood Ratio (LLR) Information, and is a sequence of continuous values or a sequence of discrete values at a plurality of levels. Examples of algorithms applicable to the constellation de-mapping include linear filtering such as zero forcing (ZF) and minimum mean square error (MMSE), or a nonlinear algorithm such as Maximum Likelihood (ML) detection and ML estimation.
After generating the soft decision value and the LLR, the reception device performs de-interleaving and descrambling corresponding to the processing of interleaving and scrambling performed on the transmission side. The reception device also performs rate de-matching and FEC decoding corresponding to the processing on the transmission side. With this operation, the reception device decodes the information bit sequence of the upper layer.

The reception device may perform iterative decoding processing (for example, iterative/turbo de-mapping, iterative/turbo equalization, iterative/turbo decoding, iterative/turbo cancellation, and the like.). For example, the reception device may regenerate a transmission signal replica (for example, soft replica, soft interference replica, or the like) from the temporarily decoded information bit sequence of the upper layer, and may use the regenerated transmission signal replica for the feedback to the constellation de-mapping or processing of generating a soft decision value. Such repetitive processing can be effective in improvement of the reception performance.

<3-2. Configuration procedure>

In order to implement the communication method (transmission method or reception method) of the present embodiment, it is necessary to share information related to constellation mapping/de-mapping among communication devices. The information may be shared using system information, RRC signaling, control information, or the like.

(Uplink communication/downlink communication)

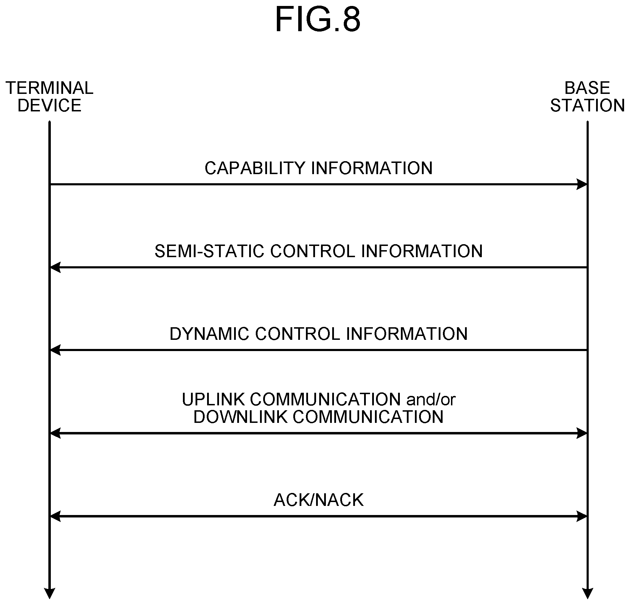

First, a procedure example in uplink communication or downlink communication will be described. FIG. 8 is a sequence diagram illustrating a procedure example in uplink communication or downlink communication.

First, the terminal device 30 notifies the base station 20 of capability information. For example, the terminal device 30 notifies the base station 20 to which the device is connected whether the device itself is compatible with the present embodiment. When not compatible with the present embodiment, the terminal device 30 performs communication using an ordinary communication scheme (for example, an OFDMA system, a DFT-Spread-OFDMA system, or the like). When it is compatible with the present embodiment, the terminal device 30 and the base station 20 share specific values of parameters required for implementing the communication method of the present embodiment.

In a case where the communication method of the present embodiment is to be implemented on a physical control channel (for example, Physical Downlink Control Channel (PDCCH) and Physical Uplink Control Channel (PUCCH), it is desirable that values of these parameters be notified from the base station 20 to the terminal device 30 as semi-static information or cell-specific information. For example, the base station 20 notifies the terminal device 30 of the system information or the RRC signaling (that is, the value of the parameter is included in a predetermined RRC message) by using a Physical Broadcast Channel (PBCH) or a Physical Downlink Shared Channel (PDSCH).

When the communication method of the present embodiment is implemented on a physical shared channel (for example, PDSCH and Physical Uplink Shared Channel (PUSCH), it is desirable that the parameters of the present embodiment be notified from the base station 20 to the terminal device 30 as semi-static information, dynamic information, or terminal-specific (UE-specific, UE-group-specific) information. For example, the base station 20 notifies the terminal device 30 of Downlink Control Information (DCI) using Physical Downlink Control Channel (PDCCH). At this time, the base station 20 may notify information regarding radio resources to be used by the terminal device 30 together with the parameters of the present embodiment. Examples of the information regarding radio resources include information such as frequency information (resource block, component carrier), time information (subframe, slot, mini-slot), and/or spatial information (number of MIMO layers (spatial layers, spatial streams)).

In the case of the uplink, the terminal device 30 that has received the parameter of the present embodiment from the base station 20 transmits a signal to the base station 20 using the notified parameter value and radio resources by using the communication scheme of the present embodiment. In the case of the downlink, the terminal device 30 performs reception processing on the assumption that the base station 20 has transmitted a signal to the terminal device 30 using the notified parameter and radio resource.

(Sidelink communication)

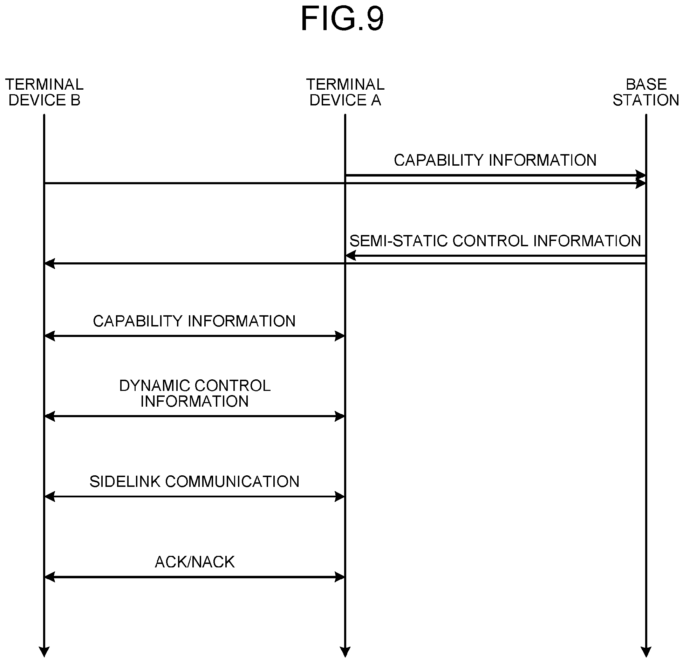

Next, a procedure example in sidelink communication will be described. FIG. 9 is a sequence diagram illustrating a procedure example in sidelink communication.

Also in the case of the sidelink communication, the terminal device 30 notifies the base station 20 of capability information. For example, the terminal device 30 notifies the base station 20 to which the device is connected of the compatibility of the present embodiment.

The base station 20 notifies the terminal device 30 (a plurality of terminal devices 30) of radio resources (for example, a radio resource pool designated by time and frequency) that may be used for the sidelink communication. The notification of the information of the radio resources is desirably notified as semi-static information. The base station 20 may also notify the terminal device 30 of the value of the parameter to be applied when using the communication method of the present embodiment within the radio resources as semi-static information.

The terminal device 30 may exchange information regarding compatibility with the communication method of the present embodiment between the terminal devices 30 in the radio resource (radio resource pool) designated by the base station 20. In a case where it is not compatible, the terminal device 30 executes sidelink communication by an ordinary communication scheme. When is compatible with the communication method of the present embodiment, the terminal device 30 may execute sidelink communication using the communication scheme of the present embodiment by using the parameter value semi-statically notified from the base station 20. For example, the terminal device 30 may execute the sidelink communication of the present embodiment using a parameter notified from the base station 20 in a sidelink control channel (for example, Physical Sidelink Control Channel (PSCCH)). When the communication method of the present embodiment is applied to the Physical Sidelink Shared Channel (PSSCH)), etc., the terminal device 30 may notify the parameter of the present embodiment as Sidelink Control Information (SCI) using the PSCCH.

The terminal device 30 can also transmit or receive a sidelink signal using the value of the parameter notified in this manner.

Incidentally, the value of the parameter used in the communication method of the present embodiment may be a predetermined fixed value. For example, in a case where the communication method of the present embodiment is used in Physical Broadcast Channel (PBCH) used for initial notification of system information, it is difficult to notify a parameter previous to that point. Therefore, the communication device desirably transmits and receives data using a value of a predetermined parameter.

<3-3. Data multiplexing on same time and frequency resources>

In transmission of Orthogonal Multiple Access (OMA), a communication device transmits and receives data using orthogonal frequency axis and time axis, for example. At this time, a frame configuration of frequency and time resources is determined by subcarrier spacing, in which use of resources of the number of resource elements or more is not possible.

On the other hand, in data multiplexing (for example, multi-layer MIMO transmission and NOMA transmission) in the same time and frequency resources, a frame configuration is determined, not only by the orthogonal frequency axis and time axis, but also by additional signal processing for enabling signal separation by methods such as a MIMO layer, an interleave pattern, a spreading pattern, a scrambling pattern, a codebook, power, and/or repetition.

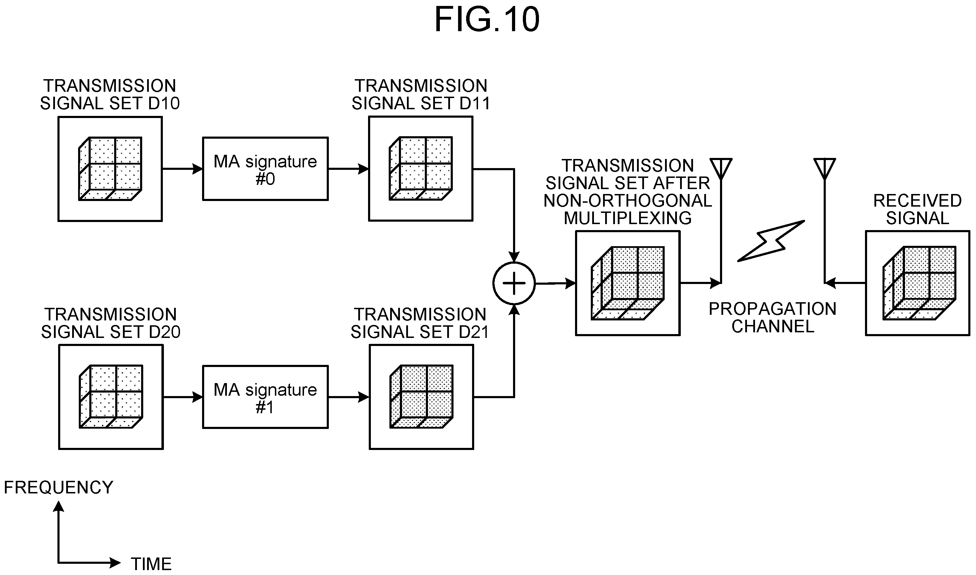

FIG. 10 is a view illustrating an example of data multiplex transmission in the same time and frequency resources. In the example of FIG. 10, the transmission device multiplexes transmission signals. In the example of FIG. 10, all the resources to be multiplexed are the same parameter set. Examples of the parameter set include a symbol length and a subcarrier spacing. Here, the transmission device may be the base station 20 or the terminal device 30.

The transmission device prepares a plurality of transmission signal sets to be multiplexed. In the example of FIG. 10, the transmission device multiplexes two transmission signal sets. Although two transmission signal sets are used here, the transmission device may multiplex three or more transmission signal sets. Note that the respective transmission signal sets may be transmission signals for different reception devices, or may be transmission signals for the same reception device. Here, the reception device may be the base station 20 or the terminal device 30.

Each transmission signal set undergoes application of corresponding signal processing. This may be referred to as a Multiple Access signature (MA signature). Here, examples of the MA signature include a MIMO layer, an interleave pattern, a spreading pattern, a scrambling pattern, a codebook, power allocation, and/or repetition. Note that the MA signature may be simply referred to as a pattern or an index. At this time, the MA signature may be an identifier indicating a pattern used in data transmission, or may be the pattern itself.

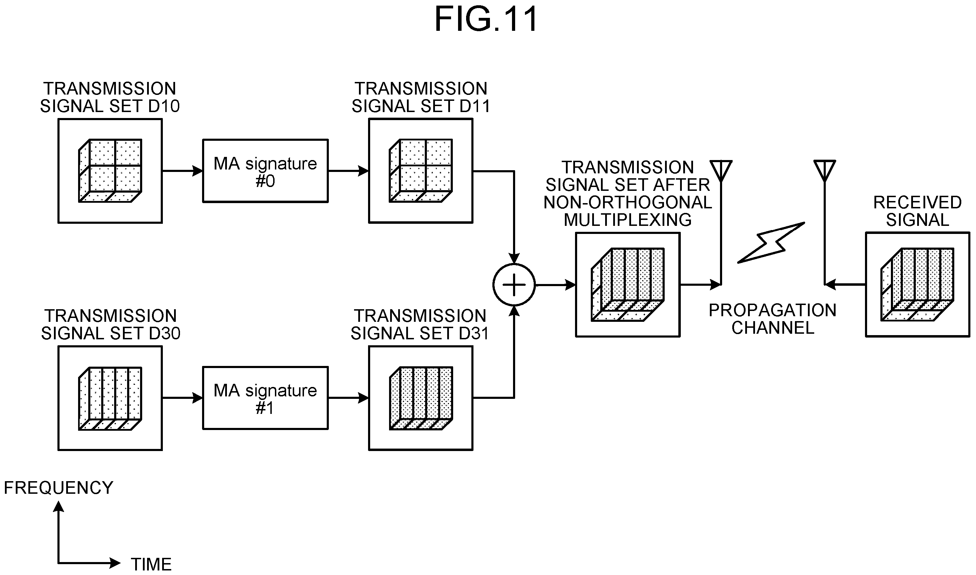

Signals that have undergone application of the MA signature are multiplexed on same frequency and time resources and sent to a same antenna port or to different antenna ports. Although FIG. 10 is a case where the communication device multiplexes transmission signal sets of the same parameter set, it is also allowable, as illustrated in FIG. 11, to multiplex transmission signal sets of different parameter sets. FIG. 11 is a view illustrating another example of data multiplex transmission in the same time and frequency resources. FIG. 11 is similar to FIG. 10 except that transmission signal sets of different parameter sets are multiplexed.

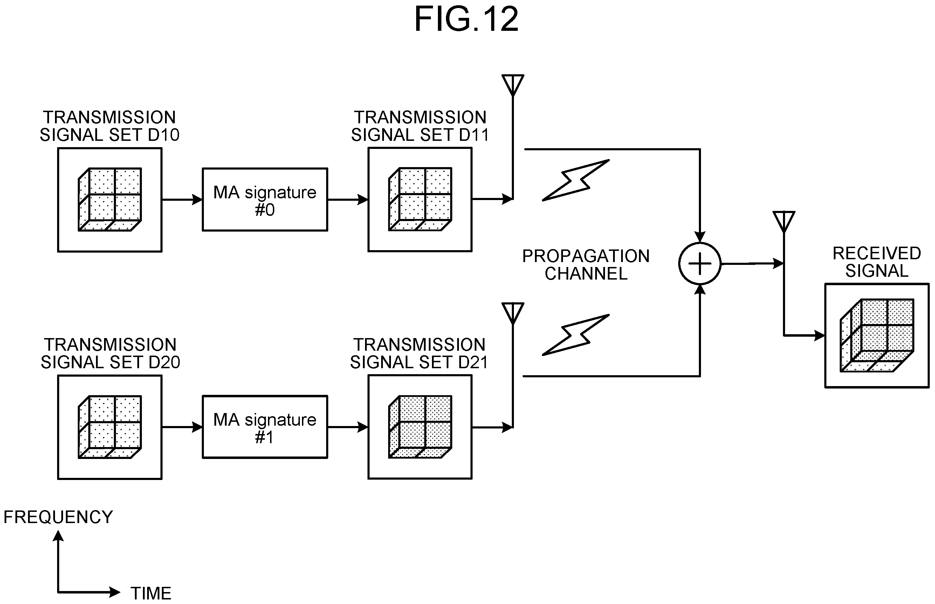

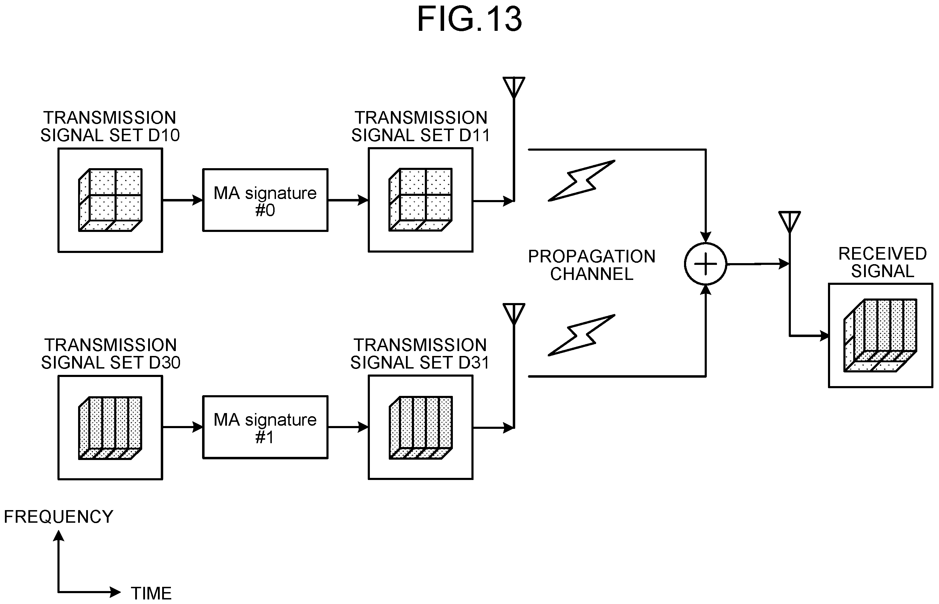

On the other hand, as illustrated in FIGS. 12 and 13, there is a conceivable method in which a transmission signal set is not multiplexed by a transmission device, and a signal that has undergone application of MA signature is transmitted so as to be multiplexed in a propagation channel. FIG.. 12 and 13 are diagrams illustrating another example of data multiplex transmission in the same time and frequency resources. Each transmission signal set undergoes application of a corresponding MA signature. Here, examples of the MA signature include a MIMO layer, an interleave pattern, a spreading pattern, a scrambling pattern, a codebook, power allocation, and/or repetition.

Signals after the MA signature application are transmitted on the same frequency and time resources and multiplexed on the propagation channel. In this case, the individual transmission signal sets may be transmitted from different transmission devices. In addition, parameter sets of transmission signals transmitted on the same frequency and time resources may be different parameter sets, as illustrated in FIG. 13.

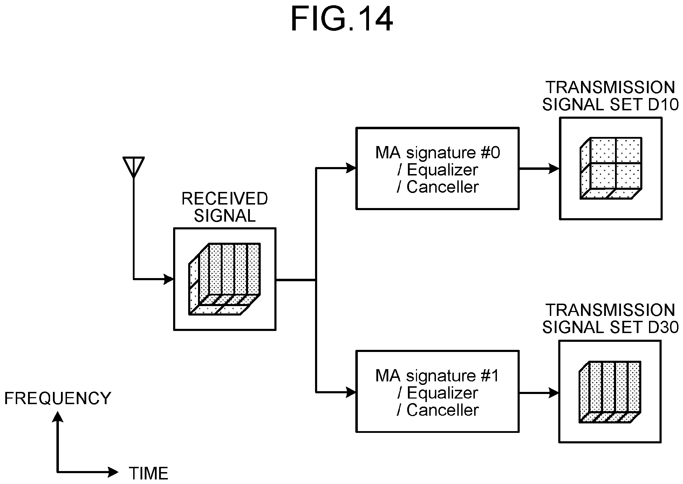

FIG. 14 is a view illustrating an example of reception processing. As illustrated in FIG. 14, the received signal is in a state where a plurality of signals is multiplexed on the same time and frequency resources. In order to decode the multiplexed transmission signal set, the reception device extracts a desired signal using the MA signature applied by the transmission device. For example, the reception device extracts a desired signal by channel equalization and an interference signal canceller. At this time, executing multiplexing using the same MA signature would increase the influence of interference between multiplexed signals, making it difficult to perform decoding.

As described above, in the data multiplex transmission in the same time and frequency resources, it is necessary to share the MA signature applied by the transmission device and the reception device between the transmission device and the reception device, and to apply the MA signature without duplication. In addition, in a case where a resource is mentioned in the following discussion, the MA signature is also included as one of the resources. Here, a resource including all of the frequency, time, and MA signature may be referred to as a multiple access (MA) resource. In addition, a resource of only frequency and time may be referred to as a multiple access (MA) physical resource.

<<4. Detailed operation of communication system>>

The basic operation of the communication system 1 has been described above. Next, the operation of the communication system 1 will be described in detail below.

As described above, in a case where signals of different subcarrier spacings are multiplexed, a multiplexing method of reference signals used in channel estimation is a problem. For example, when multiplexing signals of the same subcarrier spacing, the communication device may orthogonally arrange and transmit reference signals on the frequency resource or time resource. On the other hand, when signals with different subcarrier spacings are multiplexed, orthogonal multiplexing on frequency resources is not possible. Therefore, the communication device needs to take an action such as dividing time resources for each subcarrier spacing, leading to a decrease in frequency utilization efficiency.

Therefore, in the present embodiment, the communication system 1 multiplexes the reference signal of the first subcarrier spacing (hereinafter, referred to as a first reference signal) and the reference signal of the second subcarrier spacing different from the first subcarrier spacing (hereinafter, referred to as a second reference signal) in the communication device (the base station 20 or the terminal device 30) or on the propagation channel. At this time, the communication device inserts a zero subcarrier signal into at least either one of the first reference signal or the second reference signal so that a ratio between the subcarrier interval number of the non-zero subcarrier signal of the second reference signal and the subcarrier interval number of the non-zero subcarrier signal of the first reference signal is to be a ratio of the first subcarrier spacing and the second subcarrier spacing.

Hereinafter, this will be described in detail.

<4-1. Multiplexing of reference signals>

In the present embodiment, a plurality of reference signals (for example, a first reference signal and a second reference signal) is multiplexed. The plurality of reference signals may be multiplexed in the communication device (the base station 20 or the terminal device 30) or may be multiplexed on the propagation channel.

The communication system 1 can also multiplex three or more reference signals. For example, the communication system 1 may multiplex not only the first reference signal and the second reference signal, but also a third reference signal (reference signal of a third subcarrier spacing) in the communication device or on the propagation channel. Although the following will describe an exemplary embodiment in which two signals of a first reference signal and a second reference signal are multiplexed, the following embodiment is also applicable to a case where third or more reference signals are multiplexed.

Various methods can be used as the multiplexing method. For example, a plurality of reference signals is multiplexed on the same frequency and time resources by a technique such as Single-User/Multi-User MIMO (SU/MU-MIMO), Non-Orthogonal Multiple Access (NOMA), or pre-emption.

Regarding the transmission of the reference signal, one communication device may transmit both the first reference signal and the second reference signal. For example, the communication device may transmit the first reference signal and the second reference signal at different MIMO layers.

Regarding the transmission of the reference signal, a plurality of communication devices may be used to transmit the first reference signal and the second reference signal. For example, the terminal device $30_1$ may transmit the first reference signal, and the terminal device $30_2$ may transmit the second reference signal. Alternatively, the base station $20_1$ may transmit the first reference signal, and the base station $20_2$ may transmit the second reference signal.

Regarding the reception of the reference signal, one communication device may receive both the first reference signal and the second reference signal. For example, the communication device may receive the multiplexed first reference signal and second reference signal. At this time, the communication device may demodulate both data signal of the first subcarrier spacing and data signal of the second subcarrier spacing based on a result of channel estimation using the first reference signal and the second reference signal.

Regarding the reception of the reference signal, a plurality of communication devices may receive the first reference signal and the second reference signal. For example, out of the multiplexed first reference signal, the base station $20_1$ may receive the first reference signal and second reference signal, and the base station $20_2$ may receive the second reference signal. At this time, the base station $20_1$ may demodulate the data signal of the first subcarrier spacing based on the channel estimation result using the first reference signal, and the base station $20_2$ may demodulate the data signal of the second subcarrier spacing based on the channel estimation result using the second reference signal. Alternatively, out of the multiplexed first reference signal and second reference signal, the terminal device $30_1$ may receive the first reference signal, and the terminal device $30_2$ may receive the second reference signal. At this time, the terminal device $30_1$ may demodulate the data signal of the first subcarrier spacing based on the channel estimation result using the first reference signal, and the terminal device $30_2$ may demodulate the data signal of the second subcarrier spacing based on the channel estimation result using the second reference signal.

<4-2. Insertion of zero subcarrier signal>

The communication device (the base station 20 or the terminal device 30) of the present embodiment inserts a zero subcarrier signal into at least either one of the first reference signal or the second reference signal. Here, the zero subcarrier signal is a subcarrier signal having a zero value on the frequency axis. The zero value represents zero power or an origin on an IQ plane.

The subcarrier spacing of the first reference signal and the second reference signal may be 15 kHz to a power of 2 (for example, 15 kHz, 30 kHz, 60 kHz, or 120 kHz.). For example, the first subcarrier spacing may be 15 kHz and the second subcarrier spacing may be 30 kHz, or the first subcarrier spacing may be 15 kHz and the second subcarrier spacing may be 60 kHz. Needless to say, the subcarrier spacing may be a value other than the 15 kHz to the power of 2. For example, the first subcarrier spacing may be 1 kHz and the second subcarrier spacing may be 2 kHz.

The communication device inserts a zero subcarrier signal into at least either one of the first reference signal or the second reference signal so that a ratio between the subcarrier interval number of the non-zero subcarrier signal of the second reference signal and the subcarrier interval number of the non-zero subcarrier signal of the first reference signal is to be a ratio of the first subcarrier spacing and the second subcarrier spacing. A non-zero subcarrier signal is an ordinary subcarrier signal that is not a zero value. In addition, the subcarrier interval number of the non-zero subcarrier signal is an interval representing the interval of a non-zero subcarrier signal and another non-zero subcarrier signal by using the number of subcarriers.

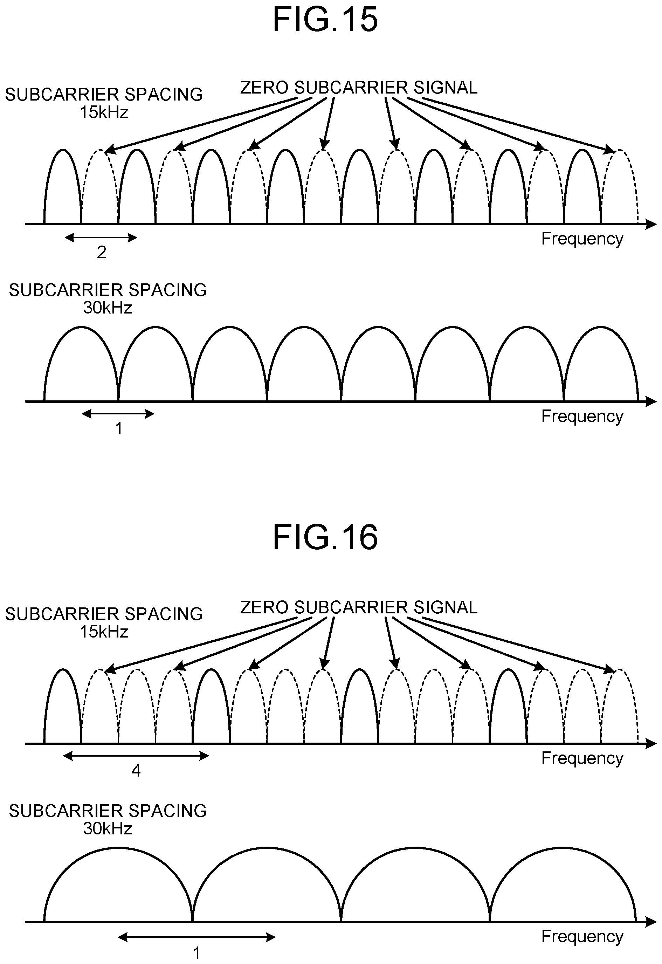

FIG. 15 is a view illustrating an insertion example of zero subcarrier signals. FIG. 15 illustrates an insertion example of zero subcarrier signals in a case where the first subcarrier spacing is 15 kHz and the second subcarrier spacing is 30 kHz. In the example of FIG. 15, the communication device inserts no zero subcarrier signals into the second reference signal, and inserts zero subcarrier signals into the first reference signal. At this time, the communication device inserts a zero subcarrier signal into the first reference signal so that a ratio between the subcarrier interval number of the non-zero subcarrier signal of the second reference signal and the subcarrier interval number of the non-zero subcarrier signal of the first reference signal becomes a ratio of the first subcarrier spacing and the second subcarrier spacing (that is, 1:2 (=15 kHz:30 kHz). In the example of FIG. 15, the communication device inserts the zero subcarrier signal into the first reference signal so that the non-zero subcarrier signal is located at every other position.

FIG. 16 is a view illustrating another insertion example of the zero subcarrier signals. FIG. 16 illustrates an insertion example of zero subcarrier signals in a case where the first subcarrier spacing is 15 kHz and the second subcarrier spacing is 60 kHz. In the example of FIG. 16, the communication device inserts no zero subcarrier signals into the second reference signal, and inserts zero subcarrier signals into the first reference signal, for example. At this time, the communication device inserts a zero subcarrier signal into the first reference signal so that a ratio between the subcarrier interval number of the non-zero subcarrier signal of the second reference signal and the subcarrier interval number of the non-zero subcarrier signal of the first reference signal becomes a ratio of the first subcarrier spacing and the second subcarrier spacing (that is, 1:4 (=15 kHz:60 kHz). In the example of FIG. 16, the communication device inserts the zero subcarrier signal into the first reference signal so that the non-zero subcarrier signal is located at every fourth position.

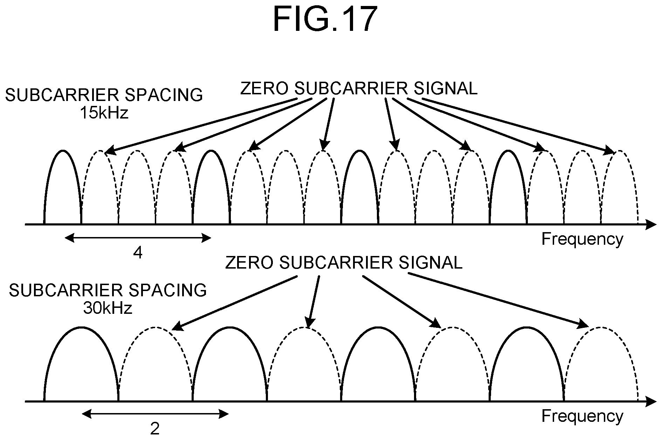

FIG. 17 is a view illustrating another insertion example of the zero subcarrier signals. FIG. 17 illustrates an insertion example of zero subcarrier signals in a case where the first subcarrier spacing is 15 kHz and the second subcarrier spacing is 30 kHz. In the example of FIG. 17, the communication device inserts zero subcarrier signals into both the first reference signal and the second reference signal. At this time, the communication device inserts a zero subcarrier signal into the first reference signal so that a ratio between the subcarrier interval number of the non-zero subcarrier signal of the second reference signal and the subcarrier interval number of the non-zero subcarrier signal of the first reference signal becomes a ratio of the first subcarrier spacing and the second subcarrier spacing (that is, 1:2 (=15 kHz:30 kHz). In the example of FIG. 17, the communication device inserts the zero subcarrier signal into the first reference signal so that the non-zero subcarrier signal is located at every fourth position, and inserts the zero subcarrier signal into the second reference signal so that the non-zero subcarrier signal is located at every other position.

The subcarrier spacing may be a value other than 15 kHz to the power of 2. For example, when the first subcarrier spacing is 15 kHz and the second subcarrier spacing is 30 kHz, the communication device inserts no zero subcarrier signal into the second reference signal, and inserts a zero subcarrier signal into the first reference signal so that the non-zero subcarrier signal is located at every other position in the first reference signal.

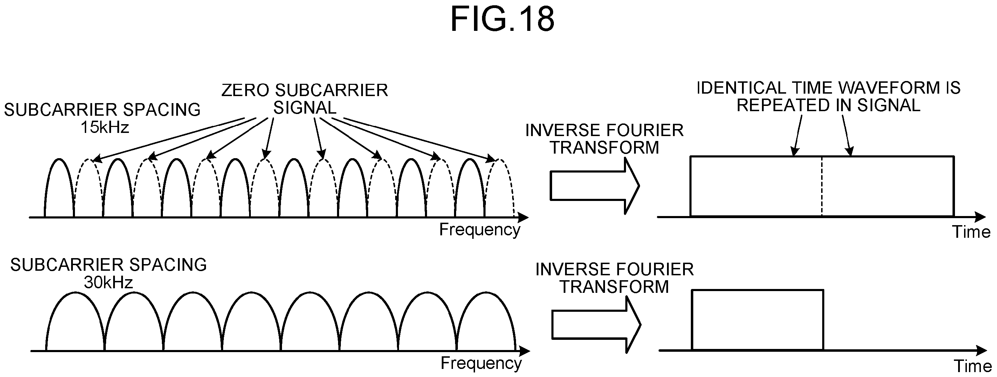

FIG. 18 is a view illustrating an example of a signal on the transmission side in a case where zero subcarrier signals are inserted. By inserting the zero value signal, either one of or both of the signal obtained by transforming the first reference signal into the time domain signal by a technique such as the inverse Fourier transform or/and the signal obtained by transforming the second reference signal into the time domain signal by the technique such as the inverse Fourier transform will be a signal repeated in the time domain. Compared with a signal having a wide subcarrier spacing, a signal having a narrow subcarrier spacing has a longer signal waveform in the time domain. By inserting the zero subcarrier signal as in the above-described exemplary embodiment, the signal waveform in the time domain will be a repeated signal waveform in the middle, making it possible for the communication device to transmit a signal having a narrow subcarrier spacing in a state of being aligned with a boundary of a signal having a wide subcarrier spacing.

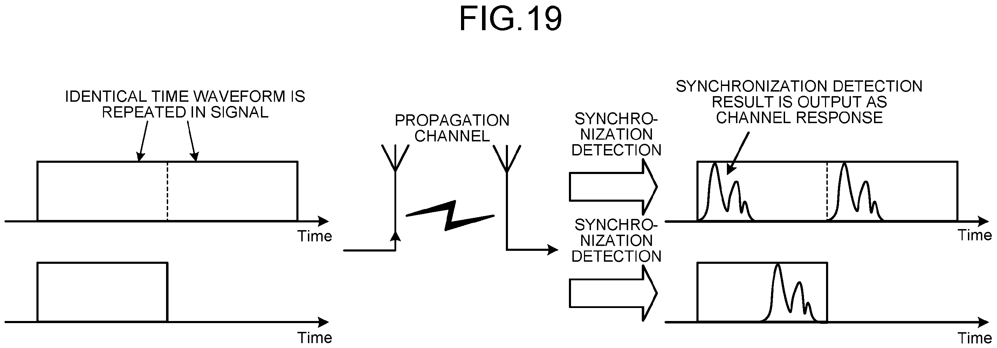

FIG. 19 is a view illustrating an example of a reception-side signal in a case where zero subcarrier signals are inserted. For example, here is an exemplary case where the transmission device transmits a multiplexed signal of a first reference signal having a subcarrier spacing of 15 kHz and a second reference signal having a subcarrier spacing of 30 kHz. When performing channel estimation on a data signal with subcarrier spacing of 15 kHz, the reception device obtains a sliding correlation by using a reference signal correlation sequence corresponding to the first reference signal. On the other hand, when performing channel estimation on a data signal with subcarrier spacing of 30 kHz, the reception device obtains a sliding correlation by using a reference signal correlation sequence corresponding to the second reference signal. At this time, by applying the sequence shift to the reference signal sequence, the synchronization detection result in the time domain will not be multiplexed across different subcarrier spacings. In the example of FIG. 19, the synchronization detection result with the subcarrier spacing of 15 kHz and the synchronization detection result with the subcarrier spacing of 30 kHz have no collision on the time axis. With this configuration, the reception device can perform channel estimation with high accuracy even when the reference signal is a signal in which signals of different subcarrier spacings are multiplexed.

<4-3. Control signal information>

The base station 20 notifies the terminal device 30 of information related to a reference signal transmission means or a reception means. The terminal device 30 receives information related to the reference signal transmission means or reception means from the base station 20, and transmits at least either one of the first reference signal or the second reference signal based on the received information.

Note that the information related to the transmission means or the reception means of the reference signal may be associated with information other than the reference signal (for example, a data signal, a control signal, or the like). For example, in a case where the subcarrier spacing of the data signal is notified from the base station 20, the terminal device 30 may judge that the subcarrier spacing of the reference signal is the same as the subcarrier spacing of the notified data signal.

The information related to the transmission means or the reception means of the reference signal may include the following information. Needless to say, information other than the following information may be included.

(1) Information related to the ratio of the first subcarrier spacing to the second subcarrier spacing.
(2) Information related to a transmission or reception resource used for multiplexing the signal of the first subcarrier spacing and the signal of the second subcarrier spacing.
(3) Information related to the guard interval or cyclic prefix of either or both of the first subcarrier spacing signal and the second subcarrier spacing signal.
(4) Information related to configuration of the reference signal transmitted with the first subcarrier spacing and the reference signal transmitted with the second subcarrier spacing. This information may include a configuration type of a reference signal, an antenna port index, and reference signal transmission resource information, for example.

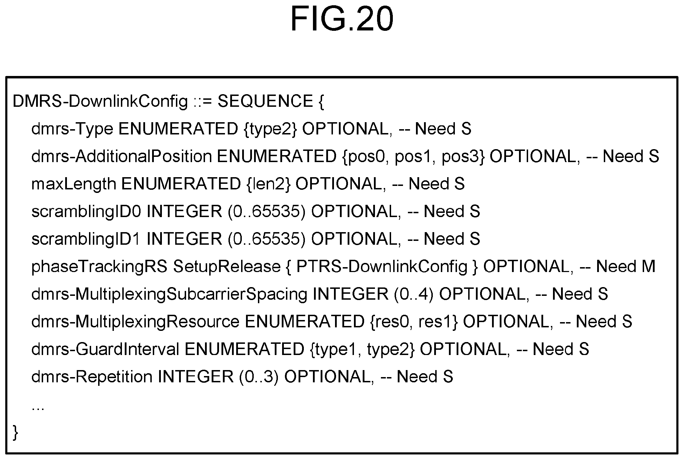

For example, when the reference signal is a DeModulation Reference Signal (DMRS), an exemplary embodiment as illustrated in FIG. 20 is conceivable as the control signal. The lower four rows in the control signal illustrated in FIG. 20 are additional information for implementing the additional transmission/reception method of the present embodiment, each of which represents the following. The exemplary embodiment illustrated in FIG. 20 is merely an example, and the control signal is not limited thereto.

(1) dmrs-MultiplexingSubcarrierSpacing

This information represents a subcarrier spacing of a signal to be multiplexed, and a power of 15 kHz is set in this information.

(2) dmrs-MultiplexingResource

Information related to a resource for multiplexing the signal of the first subcarrier spacing and the signal of the second subcarrier spacing is configured in this information. In the example of FIG. 20, two candidate resources res0 and res1 are multiplexed with DMRS, and it is notified that DMRS is to be multiplexed with either one of res0 or res1.

(3) dmrs-GuardInterval

Information related to the guard interval of the reference signal is configured in this information. In the example of FIG. 20, the type of the guard interval insertion means is notified. As an example, Type 1 indicates a means of inserting the guard interval at the front, and Type 2 indicates a means of inserting the guard interval at the front and rear.

(4) dmrs-Repetition

Information related to the number of repetitions of the reference signal is configured in this information. For example, in the example of FIG. 20, the number of repetitions of the reference signal is set in a range of 0 to 3 times. The communication device repeatedly transmits the reference signal the set number of times.
Note that the base station 20 may notify the terminal device 30 of information necessary for transmission in addition to the information related to the reference signal transmission means. Examples of assumable information include the following (1) to (12). Needless to say, the base station 20 may notify the terminal device 30 of information necessary for transmission and reception in addition to the following information.

(1) Bandwidth part indicator
(2) Frequency domain resource assignment
(3) Time domain resource assignment
(4) Rate matching indicator
(5) Modulation and coding scheme
(6) New data indicator
(7) Redundancy version
(8) HARQ process number
(9) Downlink assignment index
(10) Antenna port(s) and number of layers
(11) CBG transmission information (CBGTI)
(12) CBG flushing out information (CBGFI)

The base station 20 may notify the terminal device 30 of the above information as PBCH, system information, RRC signaling, MAC CE, or DCI, for example.

<4-4. Switching of reference signal transmission means>

The communication device may switch the reference signal transmission means between a first case of multiplexing data signals with different subcarrier spacings and a second case of multiplexing and transmitting data signals with the same subcarrier spacings or transmitting data signals without multiplexing.
For example, in the first case, the communication device may transmit the reference signal by using the reference signal transmission means in the present embodiment. For example, in the first case, the communication device may insert a zero subcarrier signal into at least either one of the first reference signal or the second reference signal, and transmit the first reference signal and the second reference signal on the same time and frequency resources.
In the second case, the communication device may transmit the reference signal using a means different from the reference signal transmission means of the present embodiment. For example, in the second case, the communication device may transmit the first reference signal and the second reference signal on different resources.

<4-4-1. Example of information of reference signal to be switched>

Examples of information regarding the reference signal to be switched include the following (1) to (8). The communication device may switch all or part of the following (1) to (8).

(1) Reference signal sequence generation means (for example, cyclic shift)
(2) Zero signal insertion number
(3) Transmission power
(4) Transmission resource
(5) Walsh code
(6) Subcarrier spacing
(7) Number of symbols
(8) Number of Resource Elements (RE)

Hereinafter, some specific examples of switching will be described.

(Specific Example 1)

For example, the communication device may switch whether to increase the number of symbols of the reference signal between the first case and the second case.
For example, in a case where signals of different subcarrier spacings are multiplexed (first case), a time interval of a time symbol of a reference signal with a wideband subcarrier spacing is shorter than a time interval of a time symbol of a reference signal with a narrowband subcarrier spacing. Therefore, in the first case, the communication device increases the number of symbols of the reference signal of a wideband subcarrier spacing so that the reference signal with a narrowband subcarrier spacing and the reference signal with a wideband subcarrier spacing have a same time interval.

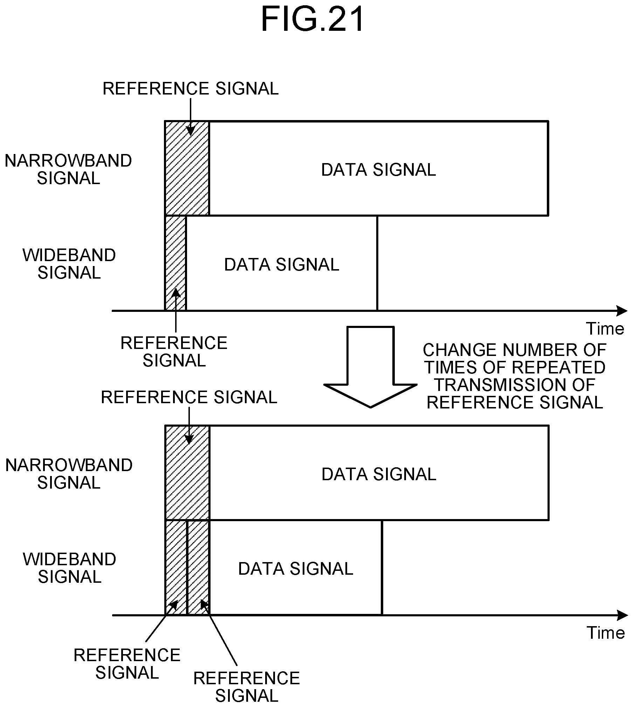

FIG. 21 is a view illustrating an example of increasing the number of symbols of a reference signal with a wideband subcarrier spacing. It can be seen that by increasing the number of symbols of the reference signal with a wideband subcarrier spacing, the symbol length becomes equivalent to the symbol length of the reference signal with a narrowband subcarrier spacing. With this configuration, it is possible to divide the time for transmitting the reference signal and the time for transmitting the data signal, enabling elimination of interference from the reference signal to the data signal and interference from the data signal to the reference signal.

(Specific Example 2)

For example, the communication device may switch whether to shift the time domain of the data signal between the first case and the second case.
For example, in a case where signals of different subcarrier spacings are multiplexed (first case), a time interval of a time symbol of a reference signal with a wideband subcarrier spacing is shorter than a time interval of a time symbol of a reference signal with a narrowband subcarrier spacing. This causes occurrence of a time of collision between the reference signal and the data signal. To handle this, the communication device shifts, in the first case, the time domain of the reference signal with a wideband subcarrier spacing so as not to allow the data signal with a narrowband subcarrier spacing and the data signal with a wideband subcarrier spacing to collide with each other. Additionally, the communication device may insert a zero subcarrier signal into the wideband side time symbol that collides with the time symbol of the reference signal with a narrowband subcarrier spacing.

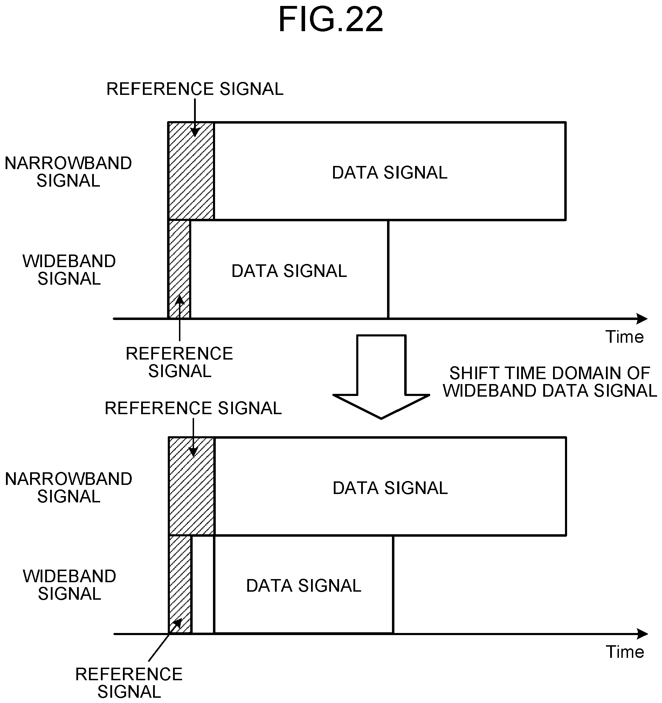

FIG. 22 is a view illustrating an example in which the time domain of the data signal is shifted. By shifting the time domain of the data signal with a wideband subcarrier spacing, it can be seen that transmission can be performed without colliding with the reference signal with a narrowband subcarrier spacing. This makes it possible to eliminate interference given by a wideband data signal to a narrowband reference signal.

(Specific Example 3)

For example, the communication device may switch whether to arrange the reference signal across a plurality of slots between the first case and the second case. For example, the communication device may arrange the reference signal sequence over a plurality of slots in the first case, and the communication device may arrange all the reference signal sequences within the transmission slot in the second case.

<4-4-2. Switching trigger>

The communication device (for example, the terminal device 30) may switch the reference signal transmission means based on an explicit notification from another communication device (for example, the base station 20), or may switch the reference signal transmission means based on an implicit notification from another communication device. For example, the terminal device 30 may switch the reference signal transmission means based on an explicit notification from the base station 20, or may switch the reference signal transmission means based on an implicit notification from the base station 20. Needless to say, the base station 20 may switch the transmission means of the reference signal based on an explicit or implicit notification (or a combination of an explicit notification and an implicit notification) from the terminal device 30.

(Explicit notification)

Examples of assumable explicit notifications include the following (1) to (4).

(1) Switching notification by system information
(2) Switching notification by RRC signaling
(3) Switching notification by MAC CE
(4) Switching notification by DCI

(Implicit notification)

Examples of assumable implicit notifications include the following (1) to (11).

(1) Switching based on subcarrier spacing

For example, the communication device may switch whether to transmit the reference signal by using the reference signal transmission means of the present embodiment or transmit the reference signal by using a means different from the reference signal transmission means of the present embodiment based on the subcarrier spacing of a signal to be transmitted.

(2) Switching based on collision-based transmission or collision-based transmission

For example, the communication device may transmit the reference signal by using the reference signal transmission means of the present embodiment in the case of collision-based transmission, and may transmit the reference signal by using a means different from the reference signal transmission means of the present embodiment in the case of non-collision-based transmission.

(3) Switching when implementing non-orthogonal multi-access signal processing

For example, the communication device may transmit the reference signal by using the reference signal transmission means of the present embodiment in the case of non-orthogonal multi-access signal processing, and may transmit the reference signal by using a means different from the reference signal transmission means of the present embodiment in the case of orthogonal multi-access signal processing. Here, the non-orthogonal multi-access signal processing may include multi-layer transmission by MIMO transmission, or may include multi-user MIMO (MU-MIMO).

(4) Switching by RNTI scrambling type of DCI

For example, the communication device may transmit the reference signal using the reference signal transmission means of the present embodiment when the DCI is scrambled with a non-orthogonal RNTI (NOMA-C-RNTI, etc.).

(5) Switching by format of DCI

For example, the communication device may transmit the reference signal by using the reference signal transmission means of the present embodiment when having received DCI format 0_0, and the communication device may transmit the reference signal by using a means different from the reference signal transmission means of the present embodiment when having received DCI format 0_1.

(6) Switching at time of communication using predetermined frequency resource or time resource

For example, the communication device may transmit the reference signal using the reference signal transmission means of the present embodiment in a case where a band width part (BWP) to be used for transmission is a predetermined BWP. In addition, the communication device may transmit a reference signal by using the reference signal transmission means of the present embodiment when transmitting data in a predetermined resource pool. In addition, the communication device may transmit a reference signal by using a means different from the reference signal transmission means of the present embodiment when transmitting data on a semi-statically configured transmission resource, and may transmit a reference signal by using a means different from the reference signal transmission means of the present embodiment when transmitting data on a dynamically configured transmission resource.

(7) Switch by number of symbols included in one slot

For example, the communication device may transmit a reference signal by using the reference signal transmission means of the present embodiment when the number of symbols is greater than N symbols, and the communication device may transmit a reference signal by using a means different from the reference signal transmission means of the present embodiment when the number of symbols is less than N symbols.

(8) Switching based on dynamic grant transmission or configured grant transmission

For example, the communication device may transmit a reference signal by using the reference signal transmission means of the present embodiment when transmitting data on a semi-statically configured transmission resource (configured grant), and may transmit a reference signal by using a means different from the reference signal transmission means of the present embodiment when transmitting data on a dynamically configured transmission resource (dynamic grant).

(9) Switching based on 2-step RACH

For example, the communication device may transmit the reference signal using the reference signal transmission means of the present embodiment in the case of 2-step RACH, and the communication device may transmit the reference signal using a means different from the reference signal transmission means of the present embodiment in the case of 4-step RACH.

(10) Switching based on antenna port

For example, the communication device may transmit a reference signal by using the reference signal transmission means of the present embodiment when transmitting data at antenna port A, and may transmit a reference signal by using a means different from the reference signal transmission means of the present embodiment when transmitting data at antenna port B.

In a case where the communication device is the terminal device 30, the terminal device 30 may autonomously select an antenna port, or may receive information related to antenna port selection from the base station 20 and determine an antenna port to be used based on the received information.

Furthermore, the communication device (the base station 20 or the terminal device 30) may select an antenna port to be used based on the subcarrier spacing of a signal to be transmitted. In addition, the communication device may select an antenna port (for example, antenna port A) to which the reference signal transmission means of the present embodiment is applied in the case of collision-based transmission, and may select an antenna port (for example, antenna port B) to which a reference signal transmission means different from the reference signal transmission means of the present embodiment is applied in the case of non-collision-based transmission.

The communication device may select an antenna port to be used based on terminal-specific information such as International Mobile Subscriber Identity (IMSI). The communication device may select an antenna port to be used based on information such as a transmission time (for example, symbol, slot, subframe, frame, and radio frame) and a transmission band (for example, a subcarrier, a resource block, a BWP, or a component carrier.).

Furthermore, for example, the base station 20 may transmit information regarding availability (available/unavailable) of antenna port to the terminal device 30. The terminal device 30 may then select the antenna port to be used based on the information.

(11) Switching based on channel (data channel or control channel)

In addition, the communication device may switch the reference signal transmission means depending on whether the channel used for transmission is a data channel or a control channel. For example, the communication device may transmit the reference signal by using the reference signal transmission means of the present embodiment when the channel used for transmission is PDSCH, and the communication device may transmit the reference signal by using a means different from the reference signal transmission means of the present embodiment when the channel used for transmission is PDCCH.

Here, the data channel/control channel may be any of the following:.

Logical channel: BCCH, PCCH, CCCH, DCCH, DTCH, etc.
Transport channel: BCH, DL-SCH, UL-SCH, PCH, etc.
Physical channel: PBCH, PDCCH, PUCCH, PSCCH, PDSCH, PUSCH, PSSCH, PRACH, etc.

(Combination of explicit notification and implicit notification)

An explicit notification and an implicit notification may be combined to each other. For example, the base station 20 uses explicit notification to notify a candidate for implicit notification. As an example, RRC signaling (explicit notification) is used to notify the frequency resource and the time resource information to which the reference signal transmission means of the present embodiment is to be applied. The terminal device 30 judges to use the reference signal transmission means of the present embodiment when performing communication on the notified frequency resources and time resources. In contrast, the terminal device 30 judges not to use the reference signal transmission means of the present embodiment when performing communication on resources other than the notified frequency resources and time resources.

<4-4-3. Notification of capability information>

The terminal device 30 may notify the base station 20 of capability information regarding the terminal device 30. At this time, the capability information may include information indicating whether the transmission means or the reception means of the present embodiment is executable.

<4-5. Sequence example>

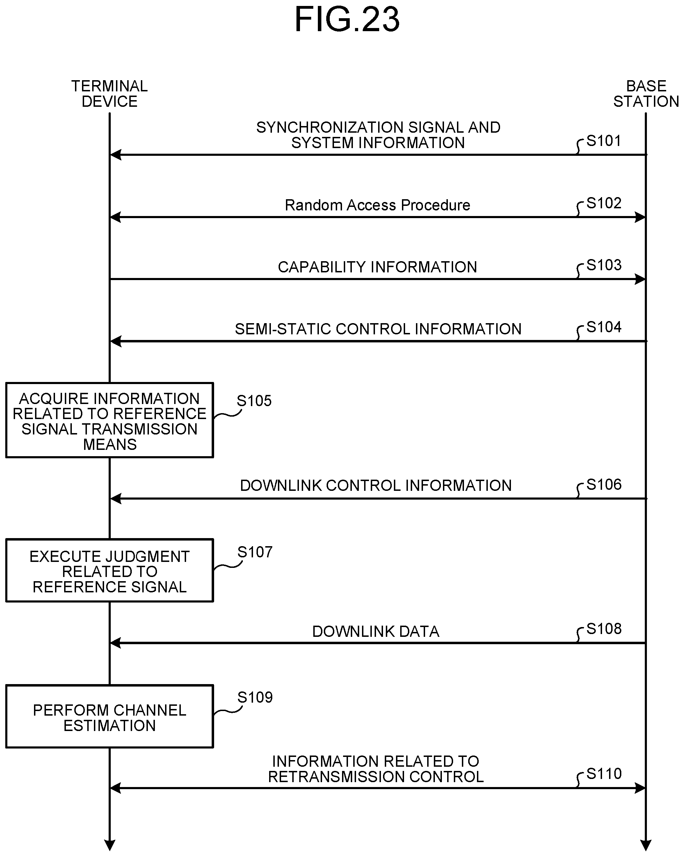

FIG. 23 is a sequence diagram illustrating a procedure example of the present embodiment. Note that the procedure of the present embodiment is not limited to the sequence illustrated in FIG. 23. Hereinafter, the procedure of the present embodiment will be described with reference to FIG. 23.

The terminal device 30 receives a synchronization signal transmitted from the base station 20 and performs downlink synchronization. Thereafter, the terminal device 30 receives system information transmitted from the base station 20, and receives information necessary for cell connection (step S101). At this time, the system information may include an explicit notification related to the reference signal transmission means of the present embodiment.

The terminal device 30 performs a random access procedure to implement connection with the base station 20 (step S102). Through this procedure, the terminal device 30 performs uplink synchronization to complete the connection to the base station 20.

The terminal device 30 notifies the base station 20 of capability information regarding the terminal device 30 (step S103). The capability information may include capability information regarding the terminal device 30 related to the reference signal transmission means of the present embodiment.

The base station 20 notifies the terminal device 30 of semi-static control information (step S104). This notification may be referred to as RRC signaling. The notification may include information related to the reference signal transmission means of the present embodiment. The terminal device 30 receives the semi-static control information, and acquires information related to the reference signal transmission means of the present embodiment (step S105).

The base station 20 transmits downlink control information (step S106). This may be referred to as DCI. The downlink control information may include a notification related to the reference signal transmission means of the present embodiment.

The terminal device 30 receives the downlink control information and receives the information related to the reference signal transmission means of the present embodiment. Here, it is assumed that information related to the reference signal transmission means of the present embodiment is notified by the control information format. The terminal device 30 judges that the reference signal has been transmitted from the transmitted control information format by using the reference signal transmission means of the present embodiment (step S107).

The base station 20 transmits the downlink data (step S108). This may be referred to as PDSCH transmission. Here, it is assumed that data of different subcarrier spacings are multiplexed in the downlink data.

The terminal device 30 implements the channel estimation means of the present embodiment and decodes the downlink data (step S109).

The terminal device 30 notifies the base station 20 of information related to retransmission control according to the decoding result of the downlink data (step S110). This notification may be referred to as notification of ACK/NACK information or notification of HARQ-ACK information.

<4-6. Reference signal sequence example>

The sequence used as the reference signal may be any sequence. When the Zadoff-Chu sequence is used, examples of assumable sequence generation means include the following.

· Sequence length N, sequence number u

$$c_u(n) = \exp((-2j\pi u)/N \cdot (n(n+1))/2)$$

However, u is prime with respect to N.
· N = 256/subcarrier bandwidth ratio, u = 1
· Signal of first subcarrier spacing (narrowband subcarrier)
n=0,1,...,N-1
· Signal of second subcarrier spacing (wideband subcarrier)
SEQUENCE SHIFT OF N/2
n=N/2+0,N/2+1,...,mod((N/2+N-1),N)

<4-7. Guard interval>

Next, the guard interval will be described.

<4-7-1. Guard interval insertion>

Examples of insertion means of the guard interval into the time symbol for transmitting the reference signal include the following (1) to (3).

(1) Front insertion

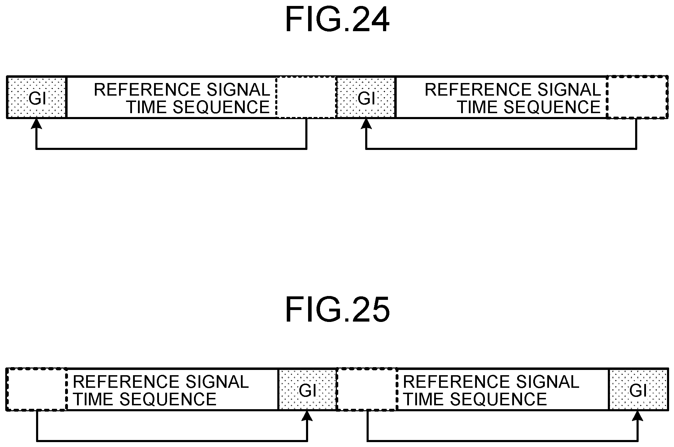

FIG. 24 is a view illustrating a state in which the guard interval is inserted at the front. In this example, the transmission device copies one or more samples from the end of the time-domain signal of the reference signal sequence, and attaches the samples before the head sample of the time-domain signal of the reference signal sequence.

(2) Rear insertion

FIG. 25 is a view illustrating a state in which the guard interval is inserted at the rear. In this example, the transmission device copies one or more samples from the head of the time-domain signal of the reference signal sequence, and attaches the sample to the portion after the last sample of the time-domain signal of the reference signal sequence.

(3) Front and rear insertion

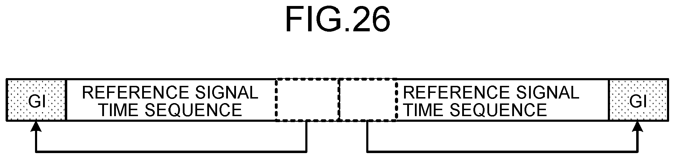

Regarding the insertion of the guard interval, the above two means may be combined with each other. FIG. 26 is a view illustrating a state in which a guard interval is inserted at the front and rear. The transmission device can apply this means when transmitting a reference signal in two or more consecutive time symbols. The communication device inserts the guard interval at the front for the head symbol of the continuous reference signal time sequence, and inserts the guard interval at the rear for the last symbol of the continuous reference signal time sequence. At this time, when the reference signal is transmitted using three or more consecutive time symbols, there may be no limitation of inserting the guard interval at the front in the first symbol or inserting the guard interval at the rear in the last symbol. For example, in the case of three consecutive time symbols, the guard interval may be inserted at the front in the first symbol, the guard interval may be inserted at the rear in the middle symbol, and the guard interval may be inserted at the front in the last symbol. Alternatively, the guard interval may be inserted at the rear in the first symbol, the guard interval may be inserted at the front in the middle symbol, and the guard interval may be inserted at the rear in the last symbol. Here, the manner of inserting the guard interval at front or rear is not limited to the above exemplary embodiment: the guard interval may be inserted at the front in the first symbol and may be inserted at the rear in the second symbol out of two consecutive symbols in three consecutive time symbols. Still alternatively, there may be no insertion of guard interval or zero padding may be used in the middle symbol. For example, for three consecutive time symbols, the guard interval may be inserted at the front in the first symbol, the guard interval may be inserted at the rear in the last symbol, and there may be no insertion of guard interval or zero padding may be used in middle symbols other than the first and the last symbols.

<4-7-2. Reference signal autocorrelation detection>

When detecting autocorrelation of the received reference signal, the reception device may detect the autocorrelation in a sequence including the guard interval, or may detect the autocorrelation in a sequence excluding the guard interval.

Furthermore, when transmitting the reference signal in two or more consecutive time symbols, the reception device may use a plurality of consecutive reference signal sequences as sequences to be used for autocorrelation detection. At this time, the communication device may include the guard interval in the sequence used for autocorrelation detection. Furthermore, the communication device may exclude the guard interval from the sequence used for autocorrelation detection.

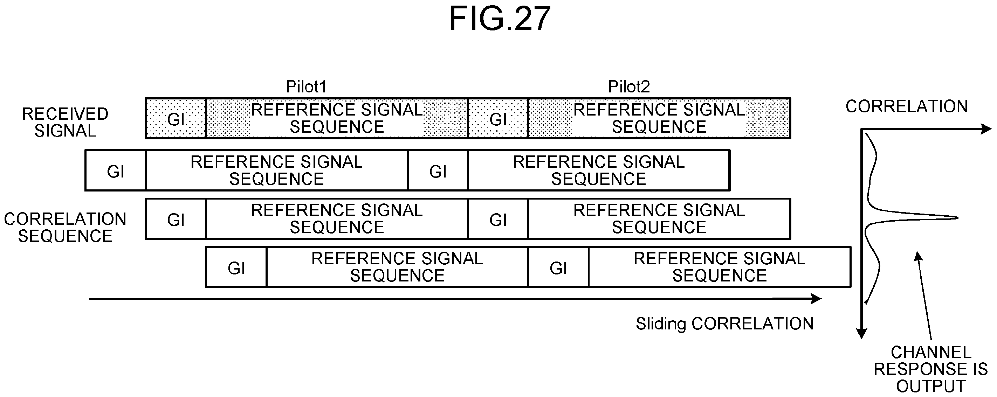

FIG. 27 is a view illustrating an example of autocorrelation detection. FIG. 27 illustrates a state of autocorrelation detection in a case where the guard interval is inserted at the front. For a received signal of a reference signal, the reception device performs sliding correlation by using a correlation sequence. The correlation value outputs a peak value at a timing when the received signal and the correlation sequence match, and the value output before and after the timing is a value in which the correlation value is lower than the peak value. Since the received signal passes through a plurality of propagation paths and reaches the reception device with a delay, a plurality of correlation peak values is output. With this correlation detection, a channel response in time domain can be detected. The reception device transforms the detection result into a frequency response by Fourier transform or the like, and performs channel equalization in a frequency domain.

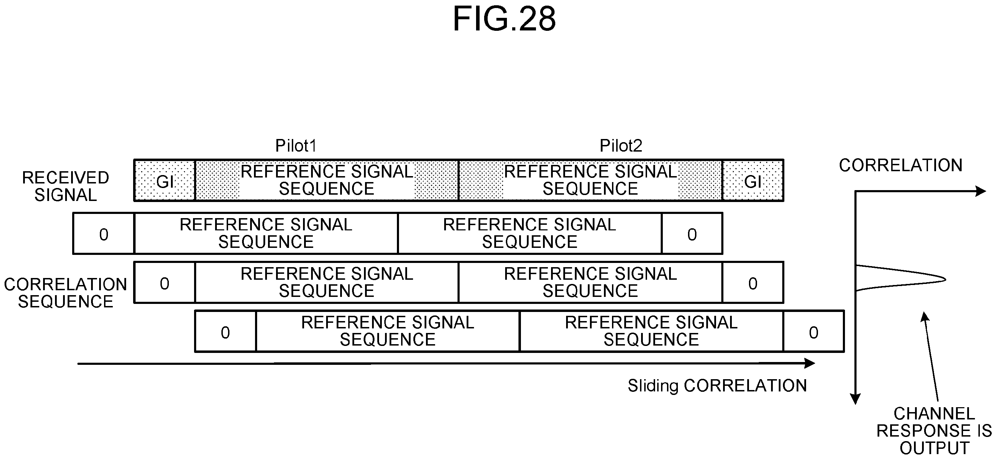

FIG. 28 is a view illustrating another example of autocorrelation detection. Specifically, in the example of FIG. 28, a guard interval is inserted at the front in the head symbol, and a guard interval is inserted at the rear in the last symbol. The reception device performs autocorrelation detection without including the guard interval. As compared with the case where the guard interval is inserted only at the front, no correlation value is output before and after the correlation peak value in the example of FIG. 28. This enables channel response detection with higher accuracy.

<4-8. Simulation evaluation>

The effectiveness of the present proposal was evaluated under the simulation conditions illustrated in Table 1 below.

(Table 1) Simulation conditions

| Coding method | Turbo coding |
|---|---|
| Coding rate | 1/3 |
| Modulation scheme | QPSK |
| Subcarrier interval | 15 kHz (Narrow subcarrier), 30 kHz (Wide subcarrier) |
| Number of all subcarriers in band | 256 |
| Number of subcarriers used for data transmission | 144 |
| Channel model | TDL-A |
| Delay Spread | 300 ns |
| Pilot sequence | Conventional technique: DMRS sequence (3GPP standard) proposed technique: Zadoff-Chu sequence |
| Shift in time domain of data signal | Perform shift |

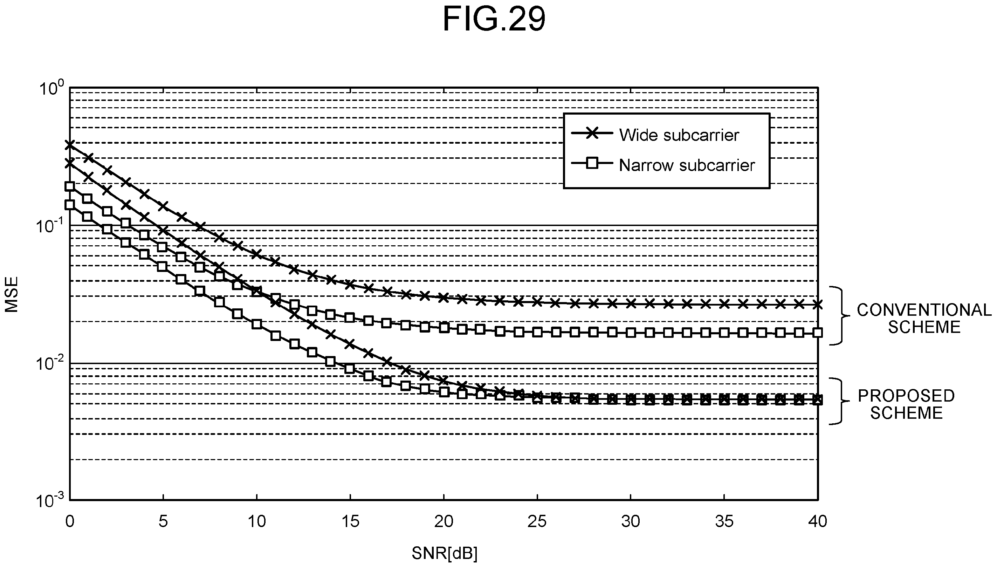

FIG. 29 is a view illustrating comparison results of the channel estimation accuracy Mean Square Error (MSE) between a case where the present proposal is applied and a case where the present proposal is not applied. In the drawing, a result of the conventional scheme is a result when channel estimation is performed using DMRS used in the 3GPP standard. In the drawing, the result of the proposed scheme is a result in a case where channel estimation is performed using the autocorrelation detection means illustrated in FIG. 28.

As can be seen from FIG. 29, the wide subcarrier and the narrow subcarrier of the proposed scheme indicate better MSE characteristics than the wide subcarrier and the narrow subcarrier of the conventional scheme, respectively. With application of the scheme of the present proposal, the reference signals of the narrow subcarrier and the wide subcarrier can be orthogonalized on the time axis and transmitted. In addition, the channel estimation correlation detection is appropriately performed, making it possible to perform correlation detection with higher accuracy. This leads to improved channel estimation accuracy.

<<5. Modification>>

The above-described embodiment is an example, and various modifications and applications are possible.

For example, the control device that controls the management device 10, the base station 20, and the terminal device 30 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control device. At this time, the control device may be devices (for example, a personal computer) external to the management device 10, the base station 20, or the terminal device 30. Furthermore, the control device may be a device (for example, the control unit 13, the control unit 23, and the control unit 33) inside the management device 10, the base station 20, and the terminal device 30, respectively.

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the portions other than the OS may be stored in a medium for distribution, or the portions other than the OS may be stored in a server device so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be arbitrarily altered unless otherwise specified. For example, a variety of information illustrated in each of the drawings are not limited to the information illustrated.

In addition, each of components of each device is provided as a functional and conceptual illustration and thus does not necessarily need to be physically configured as illustrated. That is, the specific form of distribution/integration of each of the devices is not limited to those illustrated in the drawings, and all or a part thereof may be functionally or physically distributed or integrated into arbitrary units according to various loads and use situations. This configuration by distribution and integration may be performed dynamically.

Furthermore, the above-described embodiments can be appropriately combined within a range implementable without contradiction of processing. Furthermore, the order of individual steps illustrated in the flowcharts of the above-described embodiment can be changed as appropriate.

Furthermore, for example, the present embodiment can be implemented as any configuration constituting a device or a system, for example, a processor as a large scale integration (LSI) or the like, a module using a plurality of processors or the like, a unit using a plurality of modules or the like, and a set obtained by further adding other functions to the unit, or the like (that is, a configuration of a part of the device).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a configuration of cloud computing in which one function is cooperatively shared and processed by a plurality of devices via a network.

In addition to or in place of this, the zero subcarrier signal in the present embodiment may be expressed as a zero power subcarrier signal. Similarly, the non-zero subcarrier signal may be expressed as a non-zero power subcarrier signal.

Further, at least some of the several embodiments described above may be applied to Joint Communication and Sensing (JCAS). JCAS shares radio resources for communication and sensing within the same communication device (e.g., base station or terminal device) or among a plurality of communication devices. The sensing here is sensing different from sensing of Listen Before Talk (LBT) (or Channel Access Procedure, Clear Channel Assessment (CCA)) which is an existing sensing technology in 3GPP or sensing for sidelink (sensing in resource allocation mode 2, autonomous resource selection), or may include these types of sensing. That is, the sensing target in the JCAS may be different from the busy/idle of the radio resource in the unlicensed band which is the sensing target of the LBT or the Channel Busy Ratio (CBR) in the SL sensing. For example, the sensing target in the JCAS may be a physical object. The physical object may be an object having no function of the User Equipment (UE) (terminal device) in 3GPP. In the JCAS, radio resources are shared between communication and sensing, thereby improving frequency utilization efficiency at the time of co-presence of communication and sensing. As an example (although not limited to this), the same or similar technology as that of the existing radar system may be adopted for sensing. For example, a chirp signal whose frequency changes with time may be used for sensing in JCAS. For example, by receiving a reflected wave of a signal (e.g., chirp signal) transmitted for sensing, one or a plurality of communication devices can measure a distance and a speed regarding a sensing target (e.g., physical object). In the JCAS, other names may be used for the same function. Examples that can be used include but are not limited to Joint Sensing and Communication, Integrated Communication and Sensing, Integrated Sensing and Communication, Integration of Communication and Sensing, Integration of Sensing and Communication.

The multiplexing method of the reference signal of the first subcarrier spacing (first reference signal) and the reference signal of the second subcarrier spacing different from the first subcarrier spacing (second reference signal) in some embodiments described above may also be applied to JCAS. For example, in a case where a chirp signal is employed for JCAS sensing, the multiplexing method in some embodiments described above may be applied in a case where subcarrier spacing is different between a resource to which the chirp signal is allocated and a resource to which communication (for example, a bit string corresponding to a transport block) or a reference signal (e.g., DMRS) related to the communication is allocated. In other words, for example, the above-described first subcarrier spacing may be allocated to radio resources of a reference signal (e.g., chirp signal) for JCAS sensing, and the above-described second subcarrier spacing may be allocated to radio resources allocated to communication to be joined or integrated (for example, a bit string corresponding to a transport block) or a reference signal (e.g., DMRS) related to the communication. In this case, the communication device inserts a zero subcarrier signal into at least either one of the first reference signal or the second reference signal so that a ratio between the subcarrier interval number of the non-zero subcarrier signal of the second reference signal (reference signal related to communication of JCAS) and the subcarrier interval number of the non-zero subcarrier signal of the first reference signal (reference signal related to sensing of JCAS (e.g., chirp signal)) is to be a ratio of the first subcarrier spacing and the second subcarrier spacing.

<<6. Conclusion>>

As described above, the communication device (the base station 20 or the terminal device 30) of the present embodiment transmits the reference signal (the first reference signal) of the first subcarrier spacing and the reference signal (the second reference signal) of the second subcarrier spacing different from the first subcarrier spacing. The first reference signal and the second reference signal are multiplexed in the device or on the propagation channel. The communication device inserts a zero subcarrier signal into at least either one of the first reference signal or the second reference signal so that a ratio between the subcarrier interval number of the non-zero subcarrier signal of the second reference signal and the subcarrier interval number of the non-zero subcarrier signal of the first reference signal is to be a ratio of the first subcarrier spacing and the second subcarrier spacing.

By inserting the zero subcarrier signal, the signal waveform in the time domain becomes a repeated waveform in the middle, making it possible for the communication device to transmit a signal with a narrow subcarrier spacing in a state of being aligned with a boundary of a signal with a wide subcarrier spacing. With this configuration, the synchronization detection result in the time domain on the reception side is not multiplexed between different subcarrier spacings, making it possible for the communication device to perform channel estimation with high accuracy even when the reference signal is a signal in which signals with different subcarrier spacings are multiplexed.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technique can also have the following configurations.

(1) A communication device comprising

a transmission unit that transmits at least a first reference signal with a first subcarrier spacing out of the first reference signal and a second reference signal with a second subcarrier spacing different from the first subcarrier spacing, wherein
the first reference signal and the second reference signal are signals multiplexed in a device or on a propagation channel, and
the transmission unit inserts a zero subcarrier signal into the first reference signal or into both the first reference signal and the second reference signal so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

(2) The communication device according to (1), wherein
the subcarrier spacing of the first reference signal and the second reference signal is 15 kHz to a power of 2.
(3) The communication device according to (1) or (2), wherein
the transmission unit transmits the first reference signal and the second reference signal in different MIMO layers.
(4) The communication device according to (1) or (2), wherein

the second reference signal is a signal transmitted by another communication device, and
the transmission unit transmits the first reference signal.

(5) The communication device according to any one of (1) to (4), wherein
the communication device

is a terminal device that communicates with a base station,
receives, from the base station, information related to a reference signal transmission means, and
transmits the first reference signal or both the first reference signal and the second reference signal based on the received information related to the reference signal transmission means.

(6) The communication device according to (5), wherein
the information related to the reference signal transmission means includes information related to the ratio of the first subcarrier spacing and the second subcarrier spacing.
(7) The communication device according to (5) or (6), wherein
the information related to the reference signal transmission means includes information related to a guard interval or a cyclic prefix of the first reference signal or both the first reference signal and the second reference signal.
(8) The communication device according to any one of (1) to (7), wherein
the transmission unit switches a reference signal transmission means between a first case of multiplexing data signals with different subcarrier spacings and a second case of multiplexing and transmitting data signals with same subcarrier spacings or transmitting data signals without multiplexing.
(9) The communication device according to (8), wherein,
in the first case, the transmission unit increases number of symbols of the reference signal with a wideband subcarrier spacing so that the reference signal with a narrowband subcarrier spacing and the reference signal with the wideband subcarrier spacing have a same time interval.
(10) The communication device according to (8), wherein,
in the first case, the transmission unit shifts a time domain of the reference signal with a wideband subcarrier spacing so as not to allow a data signal with a narrowband subcarrier spacing and a data signal with the wideband subcarrier spacing to collide with each other.
(11) The communication device according to any one of (8) to (10), wherein

the communication device is a terminal device that communicates with a base station, and
the transmission unit switches the reference signal transmission means based on an explicit notification from the base station.

(12) The communication device according to any one of (8) to (10), wherein
the transmission unit switches the reference signal transmission means based on subcarrier spacing information regarding data to be transmitted.
(13) The communication device according to any one of (8) to (10), wherein
the transmission unit switches the reference signal transmission means between a case of transmitting data on a predetermined frequency resource or a predetermined time resource and a case of not transmitting data on the predetermined frequency resource or the predetermined time resource.
(14) The communication device according to any one of (8) to (10), wherein
the transmission unit switches the reference signal transmission means between a case of transmitting data on a semi-statically configured transmission resource and a case of transmitting data on a dynamically configured transmission resource.

(15) The communication device according to any one of (1) to (14), wherein,

when transmitting a reference signal in two or more consecutive time symbols, the transmission unit inserts a guard interval at a front in a first symbol and inserts a guard interval at a rear in a second symbol out of two consecutive symbols among consecutive reference signal time sequences.

(16) A communication device comprising

a reception unit that receives at least a first reference signal with a first subcarrier spacing out of the first reference signal and a second reference signal with a second subcarrier spacing different from the first subcarrier spacing, wherein

the first reference signal and the second reference signal are signals multiplexed in a device or on a propagation channel, and

the first reference signal, or each of the first reference signal and the second reference signal, is a signal into which a zero subcarrier signal has been inserted so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

(17) The communication device according to (16), wherein

the reception unit receives both the first reference signal and the second reference signal, and demodulates both a data signal with the first subcarrier spacing and a data signal with the second subcarrier spacing based on a result of channel estimation using the first reference signal and the second reference signal.

(18) The communication device according to (16), wherein

the second reference signal is a signal received by another communication device, and

the reception unit receives the first reference signal, and demodulates a data signal with the first subcarrier spacing based on a result of channel estimation using the first reference signal.

(19) A communication method comprising

a transmission step of transmitting at least a first reference signal with a first subcarrier spacing out of the first reference signal and a second reference signal with a second subcarrier spacing different from the first subcarrier spacing, wherein

the first reference signal and the second reference signal are signals multiplexed in a device or on a propagation channel, and

the transmission step inserts a zero subcarrier signal into the first reference signal or into both the first reference signal and the second reference signal so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

(20) A communication method comprising

a reception step of receiving at least a first reference signal with a first subcarrier spacing out of the first reference signal and a second reference signal with a second subcarrier spacing different from the first subcarrier spacing, wherein

the first reference signal and the second reference signal are signals multiplexed in a device or on a propagation channel, and

the first reference signal, or each of the first reference signal and the second reference signal, is a signal into which a zero subcarrier signal has been inserted so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

Reference Signs List

1 COMMUNICATION SYSTEM
10 MANAGEMENT DEVICE

20 BASE STATION
30 TERMINAL DEVICE
11 COMMUNICATION UNIT
21, 31 WIRELESS COMMUNICATION UNIT
12, 22, 32 STORAGE UNIT
13, 23, 33 CONTROL UNIT
211, 311 TRANSMISSION PROCESSING UNIT
212, 312 RECEPTION PROCESSING UNIT
213, 313 ANTENNA

**Claims**

1. A communication device comprising

   a transmission unit that transmits at least a first reference signal with a first subcarrier spacing out of the first reference signal and a second reference signal with a second subcarrier spacing different from the first subcarrier spacing, wherein
   the first reference signal and the second reference signal are signals multiplexed in a device or on a propagation channel, and
   the transmission unit inserts a zero subcarrier signal into the first reference signal or into both the first reference signal and the second reference signal so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

2. The communication device according to claim 1, wherein
   the subcarrier spacing of the first reference signal and the second reference signal is 15 kHz to a power of 2.

3. The communication device according to claim 1, wherein
   the transmission unit transmits the first reference signal and the second reference signal in different MIMO layers.

4. The communication device according to claim 1, wherein

   the second reference signal is a signal transmitted by another communication device, and
   the transmission unit transmits the first reference signal.

5. The communication device according to claim 1, wherein

   the communication device
   is a terminal device that communicates with a base station,
   receives, from the base station, information related to a reference signal transmission means, and
   transmits the first reference signal or both the first reference signal and the second reference signal based on the received information related to the reference signal transmission means.

6. The communication device according to claim 5, wherein
   the information related to the reference signal transmission means includes information related to the ratio of the first subcarrier spacing and the second subcarrier spacing.

7. The communication device according to claim 5, wherein
   the information related to the reference signal transmission means includes information related to a guard interval or a cyclic prefix of the first reference signal or both the first reference signal and the second reference signal.

8. The communication device according to claim 1, wherein
   the transmission unit switches a reference signal transmission means between a first case of multiplexing data signals with different subcarrier spacings and a second case of multiplexing and transmitting data signals with same subcarrier spacings or transmitting data signals without multiplexing.

9. The communication device according to claim 8, wherein,

in the first case, the transmission unit increases number of symbols of the reference signal with a wideband subcarrier spacing so that the reference signal with a narrowband subcarrier spacing and the reference signal with the wideband subcarrier spacing have a same time interval.

10. The communication device according to claim 8, wherein,
in the first case, the transmission unit shifts a time domain of the reference signal with a wideband subcarrier spacing so as not to allow a data signal with a narrowband subcarrier spacing and a data signal with the wideband subcarrier spacing to collide with each other.

11. The communication device according to claim 8, wherein

the communication device is a terminal device that communicates with a base station, and
the transmission unit switches the reference signal transmission means based on an explicit notification from the base station.

12. The communication device according to claim 8, wherein
the transmission unit switches the reference signal transmission means based on subcarrier spacing information regarding data to be transmitted.

13. The communication device according to claim 8, wherein
the transmission unit switches the reference signal transmission means between a case of transmitting data on a predetermined frequency resource or a predetermined time resource and a case of not transmitting data on the predetermined frequency resource or the predetermined time resource.

14. The communication device according to claim 8, wherein
the transmission unit switches the reference signal transmission means between a case of transmitting data on a semi-statically configured transmission resource and a case of transmitting data on a dynamically configured transmission resource.

15. The communication device according to claim 1, wherein,
when transmitting a reference signal in two or more consecutive time symbols, the transmission unit inserts a guard interval at a front in a first symbol and inserts a guard interval at a rear in a second symbol out of two consecutive symbols among consecutive reference signal time sequences.

16. A communication device comprising

a reception unit that receives at least a first reference signal with a first subcarrier spacing out of the first reference signal and a second reference signal with a second subcarrier spacing different from the first subcarrier spacing, wherein
the first reference signal and the second reference signal are signals multiplexed in a device or on a propagation channel, and
the first reference signal, or each of the first reference signal and the second reference signal, is a signal into which a zero subcarrier signal has been inserted so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

17. The communication device according to claim 16, wherein
the reception unit receives both the first reference signal and the second reference signal, and demodulates both a data signal with the first subcarrier spacing and a data signal with the second subcarrier spacing based on a result of channel estimation using the first reference signal and the second reference signal.

18. The communication device according to claim 16, wherein

the second reference signal is a signal received by another communication device, and
the reception unit receives the first reference signal, and demodulates a data signal with the first subcarrier spacing based on a result of channel estimation using the first reference signal.

19. A communication method comprising

a transmission step of transmitting at least a first reference signal with a first subcarrier spacing out of the first reference signal and a second reference signal with a second subcarrier spacing different from the first subcarrier spacing, wherein

the first reference signal and the second reference signal are signals multiplexed in a device or on a propagation channel, and

the transmission step inserts a zero subcarrier signal into the first reference signal or into both the first reference signal and the second reference signal so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

20. A communication method comprising

a reception step of receiving at least a first reference signal with a first subcarrier spacing out of the first reference signal and a second reference signal with a second subcarrier spacing different from the first subcarrier spacing, wherein

the first reference signal and the second reference signal are signals multiplexed in a device or on a propagation channel, and

the first reference signal, or each of the first reference signal and the second reference signal, is a signal into which a zero subcarrier signal has been inserted so that a ratio between a subcarrier interval number of a non-zero subcarrier signal of the second reference signal and a subcarrier interval number of a non-zero subcarrier signal of the first reference signal is to be a ratio of the first subcarrier spacing and the second subcarrier spacing.

# FIG.1

SUBCARRIER SPACING 15kHz

ZERO-VALUE SIGNAL

INVERSE FOURIER TRANSFORM

IDENTICAL TIME WAVEFORM IS REPEATED IN SIGNAL

Frequency

Time

SUBCARRIER SPACING 30kHz

INVERSE FOURIER TRANSFORM

Frequency

Time

EP 4 492 741 A1

# FIG.2

EP 4 492 741 A1

# FIG.3

MANAGEMENT DEVICE 10

COMMUNI-CATION UNIT 11

CONTROL UNIT 13

STORAGE UNIT 12

# FIG.4

BASE STATION — 20

WIRELESS COMMUNICATION UNIT — 21

TRANSMISSION PROCESSING UNIT — 211

| 211a CODER | 211b MOD-ULATOR | 211c MULTI-PLEXER | 211d WIRELESS TRANSMIS-SION UNIT |

RECEPTION PROCESSING UNIT — 212

| 212d DECODER | 212c DEMOD-ULATOR | 212b DEMULTI-PLEXER | 212a WIRELESS RECEPTION UNIT |

STORAGE UNIT — 22

CONTROL UNIT — 23

213

# FIG.5

TERMINAL DEVICE 30

WIRELESS COMMUNICATION UNIT 31

TRANSMISSION PROCESSING UNIT 311

RECEPTION PROCESSING UNIT 312

313

STORAGE UNIT 32

CONTROL UNIT 33

EP 4 492 741 A1

# FIG.6

Information Sequence from Upper Layer →

FEC Encoding & Rate Matching →

Scrambling & Interleaving →

Constellation Mapping & Resource Element Mapping →

Waveform Modulation →

Analog/RF Processing →

RF Signals to Antennas

# FIG.7

EP 4 492 741 A1

RF Signal from Antennas → Analog/RF Processing → Scrambling & Waveform Demodulation Interleaving → Resource Element De-mapping & Constellation De-mapping → De-interleaving & De-scrambling → Rate De-matching & FEC Decoding → Information Sequence to Upper Layer

# FIG.8

TERMINAL
DEVICE

BASE
STATION

CAPABILITY INFORMATION

SEMI-STATIC CONTROL INFORMATION

DYNAMIC CONTROL INFORMATION

UPLINK COMMUNICATION and/or
DOWNLINK COMMUNICATION

ACK/NACK

# FIG.9

TERMINAL
DEVICE B

TERMINAL
DEVICE A

BASE
STATION

CAPABILITY INFORMATION

SEMI-STATIC CONTROL INFORMATION

CAPABILITY INFORMATION

DYNAMIC CONTROL
INFORMATION

SIDELINK COMMUNICATION

ACK/NACK

# FIG.10

TRANSMISSION SIGNAL SET D10 → MA signature #0 → TRANSMISSION SIGNAL SET D11

TRANSMISSION SIGNAL SET D20 → MA signature #1 → TRANSMISSION SIGNAL SET D21

TRANSMISSION SIGNAL SET AFTER NON-ORTHOGONAL MULTIPLEXING

PROPAGATION CHANNEL

RECEIVED SIGNAL

FREQUENCY

TIME

EP 4 492 741 A1

# FIG.11

EP 4 492 741 A1

# FIG.12

TRANSMISSION
SIGNAL SET D10

MA signature
#0

TRANSMISSION
SIGNAL SET D11

TRANSMISSION
SIGNAL SET D20

MA signature
#1

TRANSMISSION
SIGNAL SET D21

PROPAGATION
CHANNEL

RECEIVED
SIGNAL

FREQUENCY

TIME

EP 4 492 741 A1

# FIG.13

TRANSMISSION SIGNAL SET D10 → MA signature #0 → TRANSMISSION SIGNAL SET D11 → [antenna] → PROPAGATION CHANNEL

TRANSMISSION SIGNAL SET D30 → MA signature #1 → TRANSMISSION SIGNAL SET D31 → [antenna]

[+] → [antenna] → RECEIVED SIGNAL

FREQUENCY

TIME

# FIG.14

TRANSMISSION
SIGNAL SET D10

MA signature #0
/ Equalizer
/ Canceller

RECEIVED
SIGNAL

TRANSMISSION
SIGNAL SET D30

MA signature #1
/ Equalizer
/ Canceller

FREQUENCY

TIME

# FIG.15

SUBCARRIER SPACING
15kHz

ZERO SUBCARRIER SIGNAL

Frequency

2

SUBCARRIER SPACING
30kHz

Frequency

1

# FIG.16

SUBCARRIER SPACING
15kHz

ZERO SUBCARRIER SIGNAL

Frequency

4

SUBCARRIER SPACING
30kHz

Frequency

1

# FIG.17

# FIG.18

SUBCARRIER SPACING
15kHz

ZERO SUBCARRIER
SIGNAL

Frequency

INVERSE FOURIER
TRANSFORM

IDENTICAL TIME WAVEFORM IS
REPEATED IN SIGNAL

Time

SUBCARRIER SPACING
30kHz

Frequency

INVERSE FOURIER
TRANSFORM

Time

EP 4 492 741 A1

## FIG.19

# FIG.20

```
DMRS-DownlinkConfig ::= SEQUENCE {
    dmrs-Type ENUMERATED {type2} OPTIONAL, -- Need S
    dmrs-AdditionalPosition ENUMERATED {pos0, pos1, pos3} OPTIONAL, -- Need S
    maxLength ENUMERATED {len2} OPTIONAL, -- Need S
    scramblingID0 INTEGER (0..65535) OPTIONAL, -- Need S
    scramblingID1 INTEGER (0..65535) OPTIONAL, -- Need S
    phaseTrackingRS SetupRelease { PTRS-DownlinkConfig } OPTIONAL, -- Need M
    dmrs-MultiplexingSubcarrierSpacing INTEGER (0..4) OPTIONAL, -- Need S
    dmrs-MultiplexingResource ENUMERATED {res0, res1} OPTIONAL, -- Need S
    dmrs-GuardInterval ENUMERATED {type1, type2} OPTIONAL, -- Need S
    dmrs-Repetition INTEGER (0..3) OPTIONAL, -- Need S

    ...
}
```

# FIG.21

REFERENCE SIGNAL

NARROWBAND
SIGNAL

DATA SIGNAL

WIDEBAND
SIGNAL

DATA SIGNAL

Time

REFERENCE
SIGNAL

CHANGE NUMBER OF
TIMES OF REPEATED
TRANSMISSION OF
REFERENCE SIGNAL

REFERENCE SIGNAL

NARROWBAND
SIGNAL

DATA SIGNAL

WIDEBAND
SIGNAL

DATA SIGNAL

Time

REFERENCE
SIGNAL

REFERENCE
SIGNAL

# FIG.22

REFERENCE SIGNAL

NARROWBAND
SIGNAL

DATA SIGNAL

WIDEBAND
SIGNAL

DATA SIGNAL

Time

REFERENCE
SIGNAL

SHIFT TIME DOMAIN OF
WIDEBAND DATA SIGNAL

REFERENCE SIGNAL

NARROWBAND
SIGNAL

DATA SIGNAL

WIDEBAND
SIGNAL

DATA SIGNAL

Time

REFERENCE
SIGNAL

52

# FIG.23

TERMINAL DEVICE

BASE STATION

SYNCHRONIZATION SIGNAL AND SYSTEM INFORMATION — S101

Random Access Procedure — S102

CAPABILITY INFORMATION — S103

SEMI-STATIC CONTROL INFORMATION — S104

ACQUIRE INFORMATION RELATED TO REFERENCE SIGNAL TRANSMISSION MEANS — S105

DOWNLINK CONTROL INFORMATION — S106

EXECUTE JUDGMENT RELATED TO REFERENCE SIGNAL — S107

DOWNLINK DATA — S108

PERFORM CHANNEL ESTIMATION — S109

INFORMATION RELATED TO RETRANSMISSION CONTROL — S110

# FIG.24

| GI | REFERENCE SIGNAL TIME SEQUENCE | | GI | REFERENCE SIGNAL TIME SEQUENCE |

# FIG.25

| REFERENCE SIGNAL TIME SEQUENCE | GI | REFERENCE SIGNAL TIME SEQUENCE | GI |

# FIG.26

| GI | REFERENCE SIGNAL TIME SEQUENCE | | REFERENCE SIGNAL TIME SEQUENCE | GI |

# FIG.27

# FIG.28

EP 4 492 741 A1

# FIG.29

EP 4 492 741 A1

## INTERNATIONAL SEARCH REPORT

| | International application No. |
|---|---|
| | **PCT/JP2023/005625** |

**A.    CLASSIFICATION OF SUBJECT MATTER**

*H04L 27/26*(2006.01)i; *H04B 7/0413*(2017.01)i; *H04W 72/20*(2023.01)i
FI:    H04L27/26 114; H04L27/26 113; H04L27/26 112; H04B7/0413; H04W72/20

According to International Patent Classification (IPC) or to both national classification and IPC

**B.    FIELDS SEARCHED**

Minimum documentation searched (classification system followed by classification symbols)

H04L27/26; H04B7/0413; H04W72/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

**C.    DOCUMENTS CONSIDERED TO BE RELEVANT**

| Category* | Citation of document, with indication, where appropriate, of the relevant passages | Relevant to claim No. |
|---|---|---|
| X | JP 2020-31251 A (SHARP KK) 27 February 2020 (2020-02-27) paragraphs [0005]-[0006], [0018]-[0034], fig. 1-8 | 1-8, 10-14, 16-20 |
| Y | | 9, 15 |
| Y | JP 2020-506562 A (SONY CORPORATION) 27 February 2020 (2020-02-27) paragraphs [0046]-[0055], fig. 6 | 9 |
| Y | JP 2009-94558 A (NTT DOCOMO INC) 30 April 2009 (2009-04-30) paragraphs [0036]-[0043], fig. 3-4 | 15 |
| A | US 2020/0228383 A1 (SAMSUNG ELECTRONICS CO., LTD.) 16 July 2020 (2020-07-16) paragraphs [0058], [0077]-[0103], fig. 6-7 | 1-20 |

☐ Further documents are listed in the continuation of Box C.    ☑ See patent family annex.

| | |
|---|---|
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **12 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/005625**

| Patent document cited in search report | | | Publication date (day/month/year) | Patent family member(s) | | Publication date (day/month/year) |
|---|---|---|---|---|---|---|
| JP | 2020-31251 | A | 27 February 2020 | US 2019/0312714 A1 paragraphs [0007]-[0008], [0027]-[0044], fig. 1-8C WO 2018/117139 A1 | | |
| JP | 2020-506562 | A | 27 February 2020 | US 2019/0182015 A1 paragraphs [0058]-[0067], fig. 6 US 2020/0304273 A1 WO 2018/130067 A1 EP 3570478 A1 EP 4033711 A1 CN 108306719 A CN 109155722 A KR 10-2019-0099189 A | | |
| JP | 2009-94558 | A | 30 April 2009 | (Family: none) | | |
| US | 2020/0228383 | A1 | 16 July 2020 | US 2019/0081842 A1 - US 2019/0149384 A1 WO 2017/196042 A1 EP 3442141 A1 EP 4092936 A2 KR 10-2017-0126376 A CN 109155681 A CN 112235225 A CN 112235226 A | | |

Form PCT/ISA/210 (patent family annex) (January 2015)

**REFERENCES CITED IN THE DESCRIPTION**

**Patent documents cited in the description**

- JP 2018196029 A

- JP 2020516134 A